# FASCICULE DE BREVET EUROPEEN

(11) **EP 3 827 379 B1**
(45) Date de publication et mention de la délivrance du brevet: **02.12.2026**
(21) Numéro de dépôt: 19745610.6
(22) Date de dépôt: 26.07.2019
(51) Int. Cl.: G06N 3/049, G06N 3/065

(54) **CHAÎNE SYNAPTIQUE COMPRENANT DES RÉSONATEURS SPINTRONIQUES BASÉS SUR L'EFFET DE DIODE DE SPIN ET RÉSEAU DE NEURONES COMPRENANT UNE TELLE CHAÎNE SYNAPTIQUE**
SYNAPTISCHE KETTE MIT SPINTRONIK-RESONATOREN AUF BASIS DES SPIN-DIODEN-EFFEKTS UND NEURONALES NETZ MIT SOLCH EINER SYNAPTISCHEN KETTE
SYNAPTIC CHAIN COMPRISING SPINTRONIC RESONATORS BASED ON THE SPIN DIODE EFFECT, AND NEURAL NETWORK COMPRISING SUCH A SYNAPTIC CHAIN

(30) Priorité: 26.07.2018 FR 1800806
(43) Date de publication de la demande: 02.06.2021
(73) Titulaire: THALES, 92400 Courbevoie (FR); Centre national de la recherche scientifique, 75016 Paris (FR)
(72) Inventeur: GROLLIER, Julie, 91767 PALAISEAU (FR)
(74) Mandataire: Lavoix
(86) Numéro de dépôt international: PCT/EP2019/070260
(87) Numéro de publication internationale: WO 2020/021101

(56) Documents cités:
- SENGUPTA ABHRONIL ET AL: "Proposal for an All-Spin Artificial Neural Network: Emulating Neural and Synaptic Functionalities Through Domain Wall Motion in Ferromagnets", IEEE TRANSACTIONS ON BIOMEDICAL CIRCUITS AND SYSTEMS, IEEE, US, vol. 10, no. 6, 18 May 2016 (2016-05-18), pages 1152 - 1160, XP011638387, ISSN: 1932-4545, [retrieved on 20170104], DOI: 10.1109/TBCAS.2016.2525823
- N. LOCATELLI ET AL: "Spin-torque building blocks", NATURE MATERIALS, vol. 13, no. 1, 17 December 2013 (2013-12-17), GB, pages 11 - 20, XP055593882, ISSN: 1476-1122, DOI: 10.1038/nmat3823
- TULAPURKAR A A ET AL: "Spin-torque diode effect in magnetic tunnel junctions", NATURE, MACMILLAN JOURNALS LTD, LONDON, vol. 438, 17 November 2005 (2005-11-17), pages 339 - 342, XP003005251, ISSN: 0028-0836, DOI: 10.1038/NATURE04207
- ZENG LANG ET AL: "Spin wave based synapse and neuron for ultra low power neuromorphic computation system", 2016 IEEE INTERNATIONAL SYMPOSIUM ON CIRCUITS AND SYSTEMS (ISCAS), IEEE, 22 May 2016 (2016-05-22), pages 918 - 921, XP032941700, DOI: 10.1109/ISCAS.2016.7527391

## Description

### DOMAINE TECHNIQUE DE L'INVENTION

La présente invention concerne une chaîne synaptique et un réseau de neurones.

### ARRIERE-PLAN TECHNOLOGIQUE DE L'INVENTION

Le développement de l'internet et des capteurs connectés conduit à permettre l'obtention de quantité considérable de données. Ce phénomène souvent désigné sous le terme de « big data » implique l'emploi d'ordinateurs pour pouvoir exploiter l'ensemble des données obtenues. Une telle exploitation peut être utilisée dans de multiples domaines, parmi lesquelles le traitement automatique de données, l'aide au diagnostic, l'analyse prédictive, les véhicules autonomes, la bioinformatique ou la surveillance.

Pour mettre en œuvre une telle exploitation, il est connu d'utiliser des algorithmes d'apprentissage automatique faisant partie de programmes pouvant être exécutés sur des processeurs tels que les CPU ou les GPU. Un CPU est un processeur, le sigle CPU provenant du terme anglais « Central Processing Unit » signifiant littéralement unité centrale de traitement tandis qu'un GPU est un processeur graphique, le sigle GPU provenant du terme anglais « Graphic Processing Unit » signifiant littéralement unité graphique de traitement.

Parmi les techniques de mise en œuvre d'apprentissage, l'emploi de réseaux de neurones formels, et notamment de réseaux de neurones profonds, est de plus en plus répandu, ces structures étant considérées comme très prometteuses du fait de leurs performances pour de nombreuses tâches telles que la classification automatique de données et la reconnaissance de motifs.

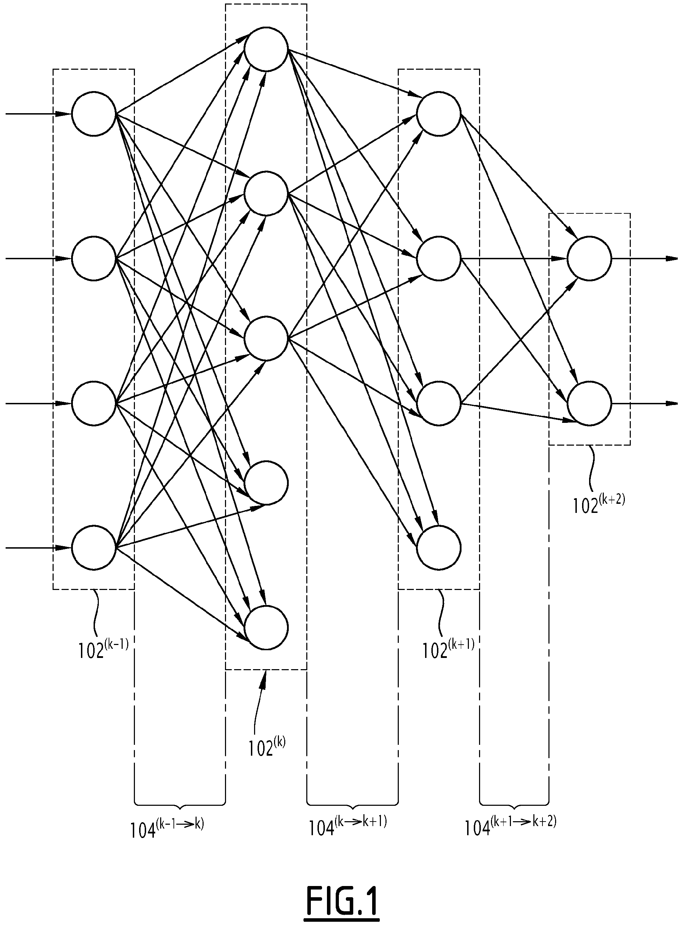

Un réseau de neurones est représenté schématiquement sur la figure 1 et est en général composé d'une succession de couches de neurones dont chacune prend ses entrées sur les sorties de la couche précédente. Plus précisément, chaque couche comprend des neurones prenant leurs entrées sur les sorties des neurones de la couche précédente. Chaque couche est reliée par une pluralité de synapses. Un poids synaptique est associé à chaque synapse. C'est un nombre réel, qui prend des valeurs positives comme négatives. Pour chaque couche, l'entrée d'un neurone est la somme pondérée des sorties des neurones de la couche précédente, la pondération étant faite par les poids synaptiques.

Par définition, un réseau de neurones profond est un réseau comprenant plus de trois couches de neurones et un grand nombre de neurones par couche.

Pour une implémentation dans un CPU ou un GPU, une problématique d'entonnoir de Von Neumann (également appelée Von Neumann bottleneck selon sa dénomination anglaise) apparaît du fait que l'implémentation d'un réseau de neurones profond implique d'utiliser à la fois la ou les mémoires et le processeur alors que ces derniers éléments sont séparés spatialement. Il en résulte un engorgement du bus de communication entre la ou les mémoires et le processeur.

Il est donc souhaitable de développer des architectures matérielles dédiées, rapprochant mémoire et calcul, pour réaliser des réseaux de neurones rapides, faible consommation et capables d'apprendre en temps réel.

Il est connu de réaliser des réseaux de neurones sur la base d'une technologie de type CMOS. Il est entendu par le sigle « CMOS », Oxyde métallique semi-conducteur complémentaire (acronyme provenant de l'expression anglaise « Complementary Metal-Oxide-Semiconductor »). Le sigle CMOS désigne aussi bien un procédé de fabrication qu'un composant obtenu par un tel procédé de fabrication.

Il est également connu un réseau de neurones reposant sur des technologies de type optique.

Plus précisément, trois propositions d'architecture font l'objet d'études spécifiques : les réseaux à neurones CMOS et synapses CMOS, les réseaux à neurones optiques et synapses optiques et les réseaux à neurones CMOS et synapses memristives. Des synapses memristives sont des synapses utilisant des memristors. En électronique, le memristor (ou memristance) est un composant électronique passif. Le nom est un mot-valise formé à partir des deux mots anglais memory et resistor. Un memristor mémorise efficacement l'information car la valeur de sa résistance électrique change, de façon permanente, lorsqu'un courant est appliqué.

Toutefois, selon chacune de ces technologies, chaque neurone occupe plusieurs dizaines de micromètres de côté. Pour les technologies CMOS et optique, chaque synapse occupe également plusieurs dizaines de micromètres de côté. Il en résulte que, sur une surface limitée correspondant par exemple à une puce électronique, le nombre de neurones et de synapses qui peuvent être intégrés est limité, ce qui résulte en une diminution des performances du réseau de neurones.

Il est également connu des propositions technologiques des documents suivants :
- un article de Sengupta Abhronil et al. intitulé "Proposal for an All-Spin Artificial Neural Network : Emulating Neural and Synaptic Functionalities Through Domain Wall Motion in Ferromagnets" IEEE Transaction on Biomedical Circuits and Systems, vol. 10, no. 6 (18 mai 2016),
- un article de N. Locatelli et al. intitulé « Spin-torque building blocks » Nature Materials, vol. 13, no. 1 (17 décembre 2013),
- un article de A Tulapurkar et al intitulé « Spin-torque diode effect in magnetic tunnel junctions » Nature, MacMillan Journals LTD, London, vol. 438 (17 novembre 2005), et
- un article de Zeng Lang et al. intitulé « Spin wave based synapse and neuron for ultra low power neuromorphic computation system » 2016 IEEE International Symposium on Circuits and Systems (22 mai 2016).

### RESUME DE L'INVENTION

Il existe donc un besoin pour un réseau de neurones présentant des performances améliorées, c'est-à-dire un plus grand nombre de neurones et de synapses.

A cet effet, la présente description propose un dispositif implémentant une chaîne synaptique de réseau de neurones telle que définie dans la revendication 1.

Il est entendu dans la présente description par « chaîne synaptique de réseau de neurones », une architecture matérielle pour une chaîne synaptique de réseau de neurones. Ainsi, cette architecture matérielle peut aussi être dénommée « dispositif pour l'implémentation d'une chaîne synaptique de réseau de neurones ».

Par ailleurs, comme l'indique le terme « un résonateur », un résonateur est un dispositif présentant au moins une fréquence de résonance. En particulier, lorsqu'un signal alternatif présente une fréquence proche de la fréquence de résonance du résonateur, le résonateur présente une résonance.

La connexion en série alternée des résonateurs dans la chaîne permet de sommer les tensions rectifiées de chaque résonateur de la chaîne, tout en éliminant en grande partie les termes purement électriques.

Par exemple, les tensions rectifiées peuvent être obtenues par l'effet de diode de spin, en plaçant une diode de type p-n ou encore en utilisant un circuit de rectification composé de transistors CMOS connecté aux résonateurs spintroniques.

Suivant des modes de réalisation particulier, le dispositif comprend une ou plusieurs des caractéristiques des revendications 2 à 7 lorsque cela est techniquement possible.

La présente description concerne aussi un dispositif implémentant un réseau de neurones comportant au moins un dispositif implémentant une chaîne synaptique telle que décrite précédemment.

Les modes de réalisation correspondant sont notamment décrits dans les modes de réalisation M1, M3 à M6, M8, M9, M11 et M13, les autres modes de réalisation étant utiles à la compréhension.

### BREVE DESCRIPTION DES FIGURES

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'un réseau de neurones ;
- figure 2, une représentation par schéma-bloc d'un réseau de neurones comportant des couches de neurones et des interconnexions ;
- figure 3, une représentation par schéma-bloc d'une couche de la figure 2 ;
- figure 4, une représentation par schéma-bloc d'une interconnexion de la figure 2 ;
- figure 5, une représentation d'un schéma-bloc électrique équivalent d'un oscillateur CMOS ;
- figure 6, une représentation schématique d'un exemple de neurones;
- figure 7, une représentation schématique d'un autre exemple de neurones ;
- figure 8, une représentation schématique d'encore un autre exemple d'ensemble de neurones ;
- figure 9, une représentation schématique d'encore un autre exemple d'ensemble de neurones ;
- figure 10, une représentation par schéma-bloc d'une interconnexion;
- figure 11, une représentation schématique d'une partie de l'interconnexion selon le premier mode de réalisation ;
- figure 12, une représentation schématique d'un exemple de résonateur de l'interconnexion selon le premier mode de réalisation ;
- figures 13 à 18, une représentation schématique des configurations d'aimantation du résonateur de la figure 12 ;
- figure 19, un premier exemple de structure d'une interconnexion selon le premier mode de réalisation ;
- figure 20, un deuxième exemple de structure d'une interconnexion selon le premier mode de réalisation ;
- figure 21, un troisième exemple de structure d'une interconnexion selon le premier mode de réalisation ;
- figure 22, une représentation schématique d'un premier exemple d'une partie de l'interconnexion selon un deuxième mode de réalisation ;
- figure 23, une représentation schématique d'un deuxième exemple d'une partie de l'interconnexion selon un deuxième mode de réalisation;
- figure 24, une représentation schématique d'un exemple de résonateur de l'interconnexion selon un troisième mode de réalisation ;
- figure 25, une représentation schématique d'un exemple d'une partie de l'interconnexion selon un cinquième mode de réalisation ;
- figure 26, une représentation schématique d'un exemple d'une partie de l'interconnexion selon un sixième mode de réalisation ;
- figure 27, une représentation schématique d'un exemple de résonateur et de plot d'ajustement de l'interconnexion selon un septième mode de réalisation ;
- figure 28, une représentation schématique d'un exemple d'une partie de l'interconnexion selon un huitième mode de réalisation ;
- figure 29, une représentation schématique d'un exemple de résonateur de l'interconnexion selon un neuvième mode de réalisation ;
- figure 30, une représentation schématique d'un exemple de résonateurs et de plots d'ajustements de l'interconnexion selon un dixième mode de réalisation ;
- figure 31, une représentation schématique d'un exemple de résonateur et de plot d'ajustement de l'interconnexion selon un douzième mode de réalisation ;
- figure 32, une représentation schématique d'un exemple de résonateur et de plot d'ajustement de l'interconnexion selon un treizième mode de réalisation ;
- figure 33, une représentation schématique d'un exemple d'une partie de l'interconnexion selon un quatorzième mode de réalisation ;
- figure 34, une représentation schématique d'un exemple d'agencement du résonateur selon le quatorzième mode de réalisation ;
- figure 35, une représentation schématique d'un exemple d'une partie de l'interconnexion selon un quinzième mode de réalisation ;
- figure 36, une représentation schématique de côté d'une vue agrandie de la figure 35 ;
- figure 37, une représentation schématique d'un exemple d'une partie de l'interconnexion selon un seizième mode de réalisation ;
- figure 38, une représentation schématique d'un exemple de résonateur et de plot d'ajustement de l'interconnexion selon un dix-septième mode de réalisation ;
- figure 39, une représentation schématique d'un exemple de résonateur et d'ajustement de l'interconnexion selon un dix-huitième mode de réalisation ;
- figure 40, une représentation schématique d'un exemple de résonateur et d'ajustement de l'interconnexion selon un vingt et unième mode de réalisation ;
- figure 41, une représentation schématique de l'interconnexion selon un vingt et deuxième mode de réalisation ;
- figure 42, une représentation schématique d'un exemple de résonateur de l'interconnexion selon un vingt-deuxième mode de réalisation ;
- figure 43, une représentation schématique d'un exemple de résonateur de l'interconnexion selon un vingt-deuxième mode de réalisation ; et
- figure 44, une représentation schématique d'un exemple de résonateur de l'interconnexion selon un vingt-troisième mode de réalisation.

### DESCRIPTION DETAILLEE DE MODES DE REALISATION PREFERES

### ARCHITECTURE GENERALE ET NOTATIONS

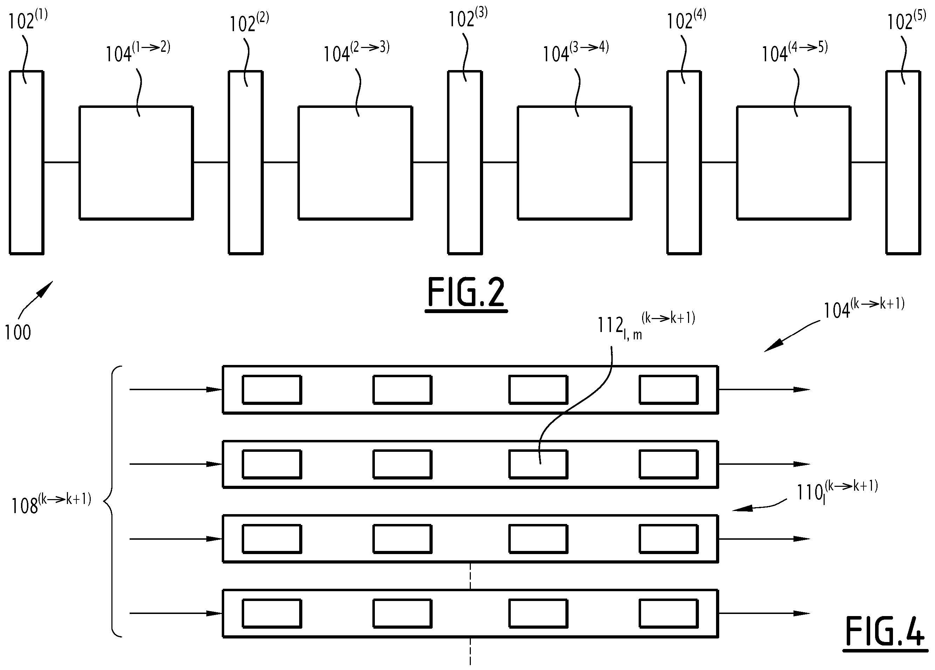

Un réseau de neurones 100 est illustré sur la figure 2.

Le réseau de neurones 100 est un réseau de neurones profond.

Le réseau de neurones 100 comprend des couches de neurones 102 et des interconnexions 104 entre les couches de neurones 102.

Chaque couche de neurones 102 est un ensemble d'au moins deux neurones 106.

Par définition, en biologie, un neurone, ou une cellule nerveuse, est une cellule excitable constituant l'unité fonctionnelle de base du système nerveux. Les neurones assurent la transmission d'un signal bioélectrique appelé influx nerveux. Les neurones ont deux propriétés physiologiques : l'excitabilité, c'est-à-dire la capacité de répondre aux stimulations et de convertir celles-ci en impulsions nerveuses, et la conductivité, c'est-à-dire la capacité de transmettre les impulsions. Dans les réseaux de neurones formels, le comportement des neurones biologiques est imité par une fonction mathématique qui présente la propriété d'être non-linéaire (pour pouvoir transformer l'entrée de manière utile) et préférentiellement d'être dérivable (pour permettre l'apprentissage par rétropropagation du gradient). Dans le cadre de cette demande, un neurone est un composant réalisant une fonction équivalente.

Les couches de neurones 102 sont ordonnées, de sorte qu'il est possible de définir un indice k pour chaque couche de neurones 102.

k est un nombre entier supérieur à 3, de préférence supérieur à 5. Cela signifie que le nombre de couches de neurones 102 est supérieur à 3, de préférence supérieur à 5.

Par définition, les expressions « supérieur » ou « inférieur » non accompagnées du terme « égal » sont à entendre au sens strict.

En l'espèce, cela implique que k > 3, de préférence que k > 5.

Dans la suite de la suite de la présente demande, les termes « amont » et « aval » sont définis par rapport au sens croissant de l'indice k.

Aussi, lorsque deux couches de neurones 102 sont consécutives, c'est-à-dire reliées uniquement par une seule interconnexion 104, la première couche de neurones sera appelée « couche amont » et référencée 102^{(k)} et la deuxième couche de neurones sera appelée « couche aval » et référencée 102^{(k+1)}. Dans un tel cas, de manière équivalente, la « couche amont » peut être dénommée « couche inférieure » et la « couche aval » peut être dénommée « couche supérieure ».

Chaque couche de neurones 102 est reliée par une interconnexion 104 à une autre couche de neurones 102. Ainsi, une couche inférieure 102^{(k)} est reliée à une couche supérieure 102^{(k+1)} par une interconnexion 104^{(k→k+1)}.

En outre, dans le présent exemple décrit, le nombre de couches de neurones 102 est égal à cinq.

Il en résulte que l'indice k varie entre 1 et 5.

La première couche de neurones 102⁽¹⁾ est reliée à la deuxième couche de neurones 102⁽²⁾ par une première interconnexion 104^{(1→2)}, la deuxième couche de neurones 102⁽²⁾ est reliée à la troisième couche de neurones 102⁽³⁾ par une deuxième interconnexion 104^{(2→3)}, la troisième couche de neurones 102⁽³⁾ est reliée à la quatrième couche de neurones 102⁽⁴⁾ par une troisième interconnexion 104^{(3→4)} et la quatrième couche de neurones 102⁽⁴⁾ est reliée à la cinquième couche de neurones 102⁽⁵⁾ par une quatrième interconnexion 104^{(4→5)}.

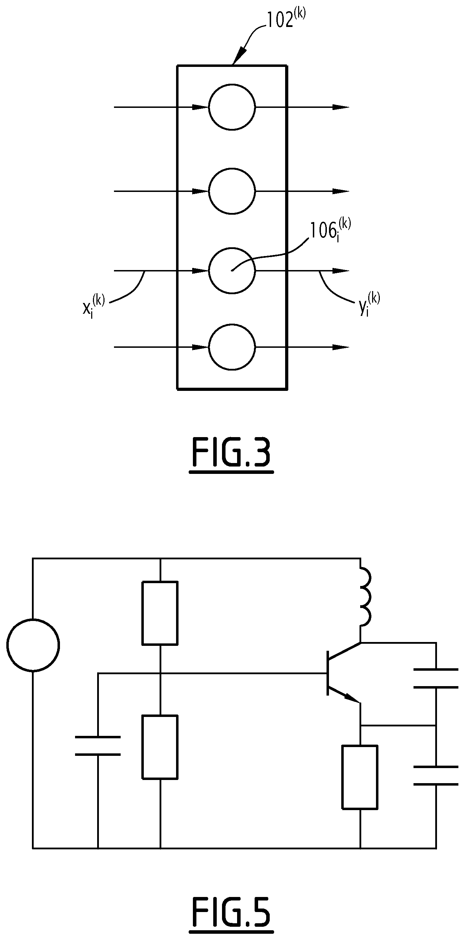

En référence à la figure 3 qui présente une couche amont, le nombre de neurones 106 dans chaque couche de neurones 102^{(k)} est noté N^{(k)}.

Pour la suite, il est défini un ordre pour les neurones 106 d'une couche 102^{(k)}.

Les neurones 106 d'une couche amont 102^{(k)} sont repérés par un indice i, i étant un nombre entier variant entre 1 et N^{(k)}. Le i-ème neurone 106 de la couche amont 102^{(k)} est noté ${106}_{i}^{\left(k\right)}$. De plus, le signal en entrée du i-ème neurone ${106}_{i}^{\left(k\right)}$ de la couche amont 102^{(k)} est noté ${x}_{i}^{\left(k\right)}$ et le signal en sortie de ce neurone ${106}_{i}^{\left(k\right)}$ est noté ${y}_{i}^{\left(k\right)}$.

Similairement, les neurones 106 d'une couche aval 102^{(k+1)} sont repérés par un indice j, j étant un nombre entier variant entre 1 et N^{(k+1)}. Le j-ème neurone 106 de la couche aval 102^{(k+1)} est noté ${106}_{j}^{\left(k+1\right)}$. De plus, le signal en entrée du j-ème neurone ${106}_{j}^{\left(k+1\right)}$ de la couche aval 102^{(k+1)} est noté ${x}_{j}^{\left(k+1\right)}$ et le signal en sortie de ce neurone ${106}_{j}^{\left(k+1\right)}$ est noté ${y}_{j}^{\left(k+1\right)}$*.*

En référence à la figure 4, l'interconnexion 104^{(k→k+1)} entre la couche amont 102^{(k)} et la couche aval 102^{(k+1)} comporte un ensemble 108^{(k→k+1)} de chaînes synaptiques 110^{(k→k+1)}.

Par définition, une chaîne synaptique 110^{(k→k+1)} de l'interconnexion 104^{(k→k+1)} entre la couche amont 102^{(k)} et la couche aval 102^{(k+1)} est un ensemble de synapses 112^{(k→k+1)} généralement reliées en série.

En biologie, la synapse désigne une zone de contact fonctionnelle qui s'établit entre deux neurones. Suivant son comportement, la synapse biologique peut exciter ou encore inhiber le neurone aval en réponse au neurone amont. Dans les réseaux de neurones formels, un poids synaptique positif correspond à une synapse excitatrice tandis qu'un poids synaptique négatif correspond à une synapse inhibitrice. Les réseaux de neurones biologiques apprennent par la modification des transmissions synaptiques dans l'ensemble réseau. De même, les réseaux de neurones formels peuvent être entraînés à réaliser des tâches en modifiant les poids synaptiques selon une règle d'apprentissage. Une des règles d'apprentissage les plus performantes aujourd'hui pour l'entrainement des réseaux profonds est la rétro-propagation du gradient (backpropagation en anglais). Dans le cadre de cette demande, une synapse est un composant réalisant une fonction équivalente à un poids synaptique de valeur modifiable.

Par ailleurs, dans la suite, nous appellerons « chaîne synaptique» ou « chaîne » un ensemble de synapses reliées en chaînes, dont la fonction est de connecter la totalité ou un sous-ensemble de neurones de la couche amont à la couche aval. Plus précisément la sortie d'une chaîne synaptique est proportionnelle à la somme pondérée des sorties des neurones de la couche précédente qui sont connectés en entrée de la chaîne, la pondération étant faite par les poids synaptiques des synapses qui constituent la chaîne. Le nombre de chaînes 110^{(k→k+1)} de l'ensemble 108^{(k→k+1)} de l'interconnexion 104^{(k→k+1)} entre la couche amont 102^{(k)} et la couche aval 102^{(k+1)} est noté L^{(k→k+1)}.

Le nombre L^{(k→k+1)} de chaînes 110^{(k→k+1)} de l'ensemble 108^{(k→k+1)} de l'interconnexion 104^{(k→k+1)} entre la couche amont 102^{(k)} et la couche aval 102^{(k+1)} est supérieur à 9, de préférence supérieur à 100.

En outre, les chaînes 110^{(k→k+1)} de l'interconnexion 104^{(k→k+1)} entre la couche amont 102^{(k)} et la couche aval 102^{(k+1)} sont ordonnées de sorte qu'il est possible de repérer chaque chaîne 110^{(k→k+1)} de l'interconnexion 104^{(k→k+1)} entre la couche amont 102^{(k)} et la couche aval 102^{(k+1)} par un nombre entier I, I variant de 1 à L^{(k→k+1)}.

De ce fait, la I-ième chaîne 110^{(k→k+1)} de l'interconnexion 104^{(k→k+1)} entre la couche amont 102^{(k)} et la couche aval 102^{(k+1)} est notée ${110}_{l}^{\left(k\to k+1\right)}$.

Les synapses 112^{(k→k+1)} d'une chaîne synaptique 110^{(k→k+1)} de l'interconnexion 104^{(k→k+1)} entre la couche amont 102^{(k)} et la couche aval 102^{(k+1)} sont ordonnées dans la chaîne synaptique 110^{(k→k+1)} de sorte qu'il est possible de repérer chaque synapse 112^{(k→k+1)} par un indice m, m étant un entier variant de 1 à ${M}_{L}^{\left(k\to k+1\right)}$ plus simplement noté M_{L} dans le cas décrit ici. L'entier M_{L} désigne le nombre de synapses 112^{(k→k+1)} d'une chaîne synaptique 110^{(k→k+1)}.

De préférence, l'entier M_{L} est un entier pair.

Il en résulte que la m-ième synapse 112^{(k→k+1)} de la I-ième chaîne synaptique ${110}_{l}^{\left(k\to k+1\right)}$ de l'interconnexion 104^{(k→k+1)} entre la couche amont 102^{(k)} et la couche aval 102^{(k+1)} est notée ${112}_{l , m}^{\left(k\to k+1\right)}$.

Dans le cas général, chaque entier N^{(k)}, L^{(k→k+1)}, M_{L} varie d'une couche de neurones 102 à l'autre. Pour la suite, la description s'attachant à décrire seulement une couche amont 102^{(k)}, une couche aval 102^{(k+1)} et surtout l'interconnexion 104^{(k→k+1)} entre les deux couches 102^{(k)} et 102^{(k+1)}, dans un souci de simplification, il est supposé que les entiers N^{(k)}, L^{(k→k+1)}, *M*^{*L*(*k*→k+1)} ne varient pas d'une couche de neurones 102 à une autre couche de neurones 102, de sorte que les exposants impliquant des notations avec k peuvent être omis lorsqu'il n'y a pas d'ambiguïtés.

Similairement, toujours pour simplifier, il est supposé, à titre d'exemple que les entiers N^{(k)}, L^{(k→k+1)} et M_{L} sont égaux, sachant que ce n'est pas le cas en général. Toutefois, la transposition à des cas où les entiers sont distincts est immédiate et n'est pas décrite dans ce qui suit.

Il en résulte que, pour la suite, les notations suivantes seront utilisées :
- le i-ème neurone 106 de la couche amont 102^{(k)} est noté 106*ᵢ* . De plus, le signal en entrée du i-ème neurone 106*ᵢ* de la couche amont 102^{(k)} est noté *xᵢ* et le signal en sortie de ce neurone 106*ᵢ* est noté *yᵢ* . L'indice i varie entre 1 et N.
- le j-ème neurone 106 de la couche aval 102^{(k+1)} est noté 106*ⱼ* . De plus, le signal en entrée du j-ème neurone 106*ⱼ* de la couche aval 102^{(k+1)} est noté *xⱼ* et le signal en sortie de ce neurone 106*ⱼ* est noté *yⱼ* . L'indice j varie entre 1 et N.
- la I-ième chaîne 110 de l'interconnexion 104^{(k→k+1)} entre la couche amont 102^{(k)} et la couche aval 102^{(k+1)} est notée 110*ᵢ* . L'indice I varie entre 1 et N.
- la m-ième synapse 112 de la I-ième chaîne synaptique 110*ₗ* de l'interconnexion 104^{(k→k+1)} entre la couche amont 102^{(k)} et la couche aval 102^{(k+1)} est notée 112_{*l*,*m*}. L'indice m varie entre 1 et N.

Une telle simplification a uniquement pour but de faciliter la lecture qui va suivre, l'extension à des cas où chaque entier N^{(k)}, L^{(k→k+1)}, M_{L} varie d'une couche de neurones 102 à l'autre et ne sont pas égaux entre eux étant immédiates.

L'architecture générale qui vient d'être décrite est maintenant décrite par référence à des exemples explicités dans ce qui suit.

### COUCHES DE NEURONES

### GENERALITES

Chaque neurone 106 qu'il soit de la couche amont 102^{(k)} ou de la couche aval 102^{(k+1)} est un oscillateur dont la fréquence est comprise entre 1 MégaHertz (MHz) jusqu'à plusieurs TéraHertz (THz). Par la suite on utilisera le terme « radiofréquence » pour se référer à cette gamme de fréquence.

Un oscillateur est un dispositif propre à générer des oscillations présentant une amplitude contrôlée et une fréquence fixe ou contrôlée sur une ou plusieurs sortie(s).

Il est défini pour chaque neurone 106 une fréquence d'oscillation propre notée ωᵢ lorsqu'il s'agit d'un neurone 106*ᵢ* de la couche amont 102^{(k)} ou notée ωⱼ lorsqu'il s'agit d'un neurone 106*ⱼ* de la couche aval 102^{(k+1)}.

Un oscillateur étant susceptible de présenter plusieurs fréquences d'oscillations, par définition, la fréquence d'oscillation d'un neurone 106*ᵢ* est la fréquence de l'oscillation présentant l'amplitude la plus importante (l'amplitude étant définie en crête à crête).

Pour la suite, le cas des neurones 106*ᵢ* de la couche amont 102^{(k)} est plus spécifiquement détaillé, les mêmes remarques s'appliquant pour les neurones 106*ⱼ* de la couche aval 102^{(k+1)}.

Dans le cas de figure illustré, les neurones 106*ᵢ* de la couche amont 102^{(k)} ont tous des fréquences d'oscillation ωᵢ distinctes deux à deux.

Selon une autre variante, il est possible que certaines fréquences d'oscillation ωᵢ soient identiques.

Les neurones 106*ᵢ* de la couche amont 102^{k} sont propres à émettre un signal de sortie *yᵢ* en direction des synapses 112*_{l,m}* des chaînes 110.

Selon les implémentations, le signal est un courant électrique radiofréquence, un champ électromagnétique radiofréquence ou une onde de spin.

Les ondes de spin sont des fluctuations de l'aimantation des matériaux ferromagnétiques autour de la position d'équilibre de l'aimantation. L'onde de spin peut être localisée ou se propager. Un matériau ferromagnétique possède une aimantation spontanée, contrairement aux matériaux non-magnétiques.

En physique, l'aimantation est une grandeur vectorielle qui caractérise à l'échelle macroscopique le comportement magnétique d'un échantillon de matière. L'aimantation a comme origine le moment magnétique orbital et le moment magnétique de spin des électrons.

### PREMIERE IMPLEMENTATION

Selon une première implémentation, chaque neurone 106*ᵢ* de la couche amont 102^{(k)} est un oscillateur CMOS.

La création d'un tel oscillateur repose sur la transposition de montages électroniques existants, tel l'oscillateur Colpitts, l'oscillateur Clapp, l'oscillateur à déphasage, l'oscillateur Pierce, l'oscillateur Hartley, l'oscillateur Leaky Integrate and Fire et ses différentes versions ou l'oscillateur à variables d'état.

En référence à la figure 5, il est proposé un tel schéma électronique pour un oscillateur Colpitts, chaque composant (inductance, résistance, condensateur et transistor) étant réalisé en technologie CMOS.

Cela permet d'obtenir un oscillateur CMOS présentant un signal d'oscillation avec une fréquence fixe et une amplitude contrôlable. Il en résulte une forte puissance émise, et un faible bruit.

### DEUXIEME IMPLEMENTATION

Selon une deuxième implémentation, chaque neurone 106*ᵢ* de la couche amont 102^{(k)} est un oscillateur spintronique.

Une telle implémentation permet de diminuer l'encombrement de la première implémentation.

Les oscillateurs spintroniques permettent d'obtenir des fréquences d'oscillation ωᵢ sur une large gamme de fréquences, entre 1 MégaHertz (MHz) et plusieurs TéraHertz (THz), notamment lorsque des matériaux antiferromagnétiques sont utilisés.

L'antiferromagnétisme est une propriété de certains milieux magnétiques. Contrairement aux matériaux ferromagnétiques, dans les matériaux antiferromagnétiques, l'interaction d'échange entre les atomes voisins conduit à un alignement antiparallèle des moments magnétiques atomiques. L'aimantation totale du matériau est alors nulle. Tout comme les ferromagnétiques, ces matériaux deviennent paramagnétiques au-dessus d'une température de transition appelée température de Néel.

L'antiferromagnétisme est distinct du ferromagnétisme qui désigne la capacité de certains corps de s'aimanter sous l'effet d'un champ magnétique extérieur et de garder une partie de cette aimantation

Par ailleurs, la spintronique, l'électronique de spin ou la magnétoélectronique, est une technique qui exploite la propriété quantique du spin des électrons dans le but de stocker des informations ou d'effectuer des opérations de calcul sur ces informations. Par extension, un composant spintronique est un composant qui exploite la propriété quantique du spin des électrons dans le but de stocker ou de traiter des informations.

Les oscillateurs spintroniques peuvent générer des signaux harmoniques ou stochastiques. Dans ce dernier cas on dit que l'oscillateur est superparamagnétique. Le superparamagnétisme est un comportement des matériaux ferromagnétiques ou ferrimagnétiques de grains de dimensions nanométriques. L'aimantation de ces grains peut se renverser spontanément sous l'influence de la température. Le temps moyen entre deux renversements, appelé temps de relaxation de Néel, définit la fréquence d'oscillation.

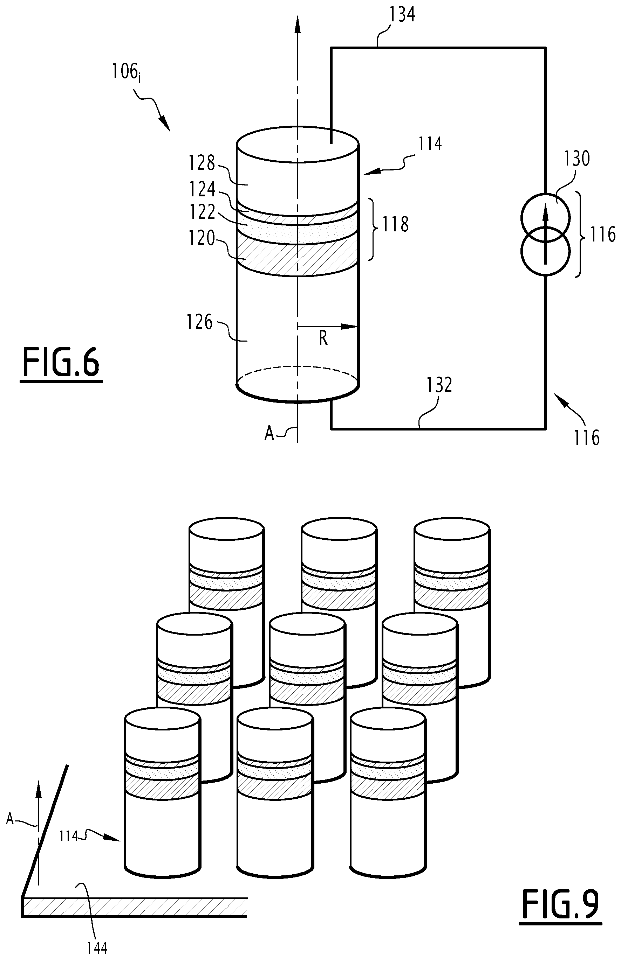

Un exemple de neurone 106*ᵢ* est représenté schématiquement sur la figure 6. Le neurone 106*ᵢ* comporte un nanopilier 114 et des moyens d'injection d'un courant d'alimentation 116 à travers le nanopilier 114.

Le diamètre caractéristique d'un nanopilier est compris entre 3 nanomètres (nm) et 1 micromètre (µm).

Le nanopilier 114 comporte un motif 118. Celui-ci est constitué de plusieurs couches, superposées le long d'une direction A d'empilement des couches, à savoir d'une première couche 120 en un matériau ferromagnétique, d'une couche intermédiaire 122 en un matériau non magnétique, et d'une seconde couche 124 en un matériau ferromagnétique.

A chacune de ses extrémités, le nanopilier 114 comporte respectivement des couches inférieure 126 et supérieure 128 qui sont disposées de part et d'autre du motif 118 et constituent des contacts permettant l'injection d'un courant d'alimentation à travers les couches 120, 122 et 124.

Les matériaux ferromagnétiques envisagés pour les couches magnétiques sont le fer Fe, le cobalt Co, le nickel Ni et les alliages ferromagnétiques comprenant au moins un de ces éléments (CoFeB par exemple), ainsi que les matériaux Heusler, les oxydes ferromagnétiques ou les semi-conducteurs ferromagnétiques. Le matériau ferromagnétique de la seconde couche 124 n'est pas forcément identique à celui de la première couche 122.

La couche intermédiaire 122 non magnétique est une couche conductrice, réalisée par exemple en cuivre Cu, en or Au, etc., ou une couche isolante, réalisée en Al₂O₃, MgO, SrTiO₃, etc.

Les couches 120, 122 et 124 ont une épaisseur comprise entre quelques dixièmes et quelques dizaines de nanomètres. Une ou plusieurs des couches 120, 122 et 124 a des dimensions latérales réduites entre 5 nm et 1 µm. Les autres couches peuvent être étendues (de quelques micromètres à plusieurs millimètres).

Dans le cas de la couche 124, cela permet alors la propagation des ondes de spin.

Les couches inférieure et supérieure 126 et 128 sont réalisées en des matériaux tels que le ruthenium, le cuivre ou l'or. Ces couches possèdent une épaisseur d'environ 25 nm. Elles ont de préférence un rayon similaire à celui des couches constitutives du motif 118.

Les moyens 116 propres à permettre l'injection d'un courant d'alimentation à travers le nanopilier 114 sont représentés schématiquement sur la figure 6 par une source de courant 130 pouvant délivrer soit un courant continu, soit un courant alternatif réglable en intensité et en fréquence, soit les deux et des électrodes 132 et 134.

Ces électrodes 132 et 134 permettent de connecter électriquement les couches inférieure et supérieure 126 et 128 aux bornes de la source 130 pour l'injection du courant d'alimentation d'une part et à un moyen de mesure (non représenté) pour la détermination de la différence de potentiel électrique à la traversée du nanopilier 114, c'est-à-dire entre les couches inférieure et supérieure 126 et 128, d'autre part.

Alternativement les couches inférieure ou supérieure 126 et 128 sont réalisées avec un métal ayant la propriété de générer un fort effet Hall de spin, c'est-à-dire des alliages métalliques comportant l'un des éléments suivants : Pt, Pd, W, Ir, Bi, Au.

L'effet Hall de spin est un phénomène de transport électrique et de spin. Cet effet consiste en l'apparition d'une accumulation de spin sur les surfaces latérales d'un barreau conducteur dans lequel se propage un courant électrique, les signes des directions de spin étant opposés sur les surfaces opposées. Dans un fil cylindrique, les spins de surface ainsi induits par le courant tournent le long du fil. Quand le courant change de signes, les spins pointent dans la direction opposée. L'accumulation de spin ainsi générée peut induire par transfert de spin le renversement de l'aimantation d'une couche magnétique placée en contact avec une des surfaces du barreau conducteur où est injecté le courant.

Dans ce cas, les couches 126 ou 128 possèdent une épaisseur entre 3 nanomètres (nm) et 15 nm. Ces électrodes sont alors plus larges que le pilier 114 et étendues afin de permettre l'injection de courant nécessaire pour générer l'accumulation de spin par effet Hall de spin. L'injection de courant se fait alors dans le plan de l'électrode 132 ou 134. Les moyens d'injection 116 sont alors tels que la source de courant 130 est connectée de part et d'autre de l'électrode 132 ou de l'électrode 134.

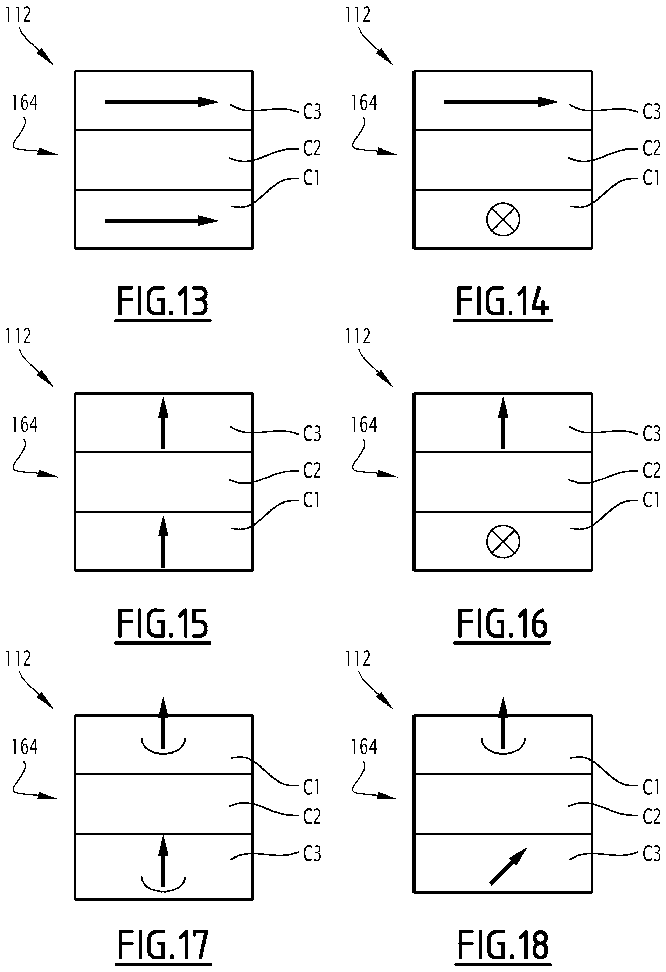

Les première et seconde couches ferromagnétiques 120 et 124 sont caractérisées par des états rémanents spécifiques illustrés sur les figures 13-18.

Plus précisément, les figures 13 à 16 décrivent des configurations d'équilibre d'aimantation telles que les premières couches ferromagnétiques 120 et 124 ont une aimantation uniforme (ou sensiblement uniforme) et présentent les propriétés décrites ci-après : les aimantations des deux couches ferromagnétiques 120 et 124 pointent dans le plan des couches ferromagnétiques 120 et 124 et sont alignées pour le cas de la figure 13; les aimantations des deux couches ferromagnétiques 120 et 124 pour le cas de la figure 14 pointent dans le plan des couches ferromagnétiques 120 et 124 et sont orthogonales ; les aimantations des deux couches ferromagnétiques 120 et 124 pour le cas de la figure 15 pointent hors du plan des couches ferromagnétiques 120 et 124 et sont alignées et pour le cas de la figure 16, l'une des aimantations est hors du plan des couches ferromagnétiques 120 et 124 et l'autre aimantation est dans le plan des couches ferromagnétiques 120 et 124. Dans le cas spécifique de la figure 17, la configuration des deux couches ferromagnétiques 120 et 124 est une configuration de type vortex. L'aimantation forme une spirale dans le plan des couches ferromagnétiques 120 et 124 sauf dans le cœur du vortex au centre où l'aimantation pointe hors du plan des couches ferromagnétiques 120 et 124. Selon les cas, les vortex des deux couches ferromagnétiques 120 et 124 présentent des chiralités ou des polarités identiques ou opposées. La chiralité est le sens de rotation du vortex tandis que la polarité est l'orientation de l'aimantation du cœur.

Le cas de la figure 18 correspond à une configuration mixte, c'est-à-dire une configuration vortex dans une des deux couches ferromagnétiques 120 et 124 tandis que la configuration de l'aimantation dans l'autre couche ferromagnétique 120 ou 124 est uniforme avec une direction quelconque par rapport au plan des deux couches ferromagnétiques 120 et 124.

D'autres configurations existent et viennent compléter les cas des figures 13 à 18 qui forment une liste non exhaustive.

L'empilement des couches du nanopilier 114, couche inférieure, couches constitutives du motif et couche supérieure, est réalisé par des techniques telles que la pulvérisation cathodique, l'épitaxie par jets moléculaires ou l'ablation laser pulsée.

Le façonnage des couches en pilier se fait par des techniques combinant lithographie électronique, lithographie optique, lithographie Laser ou gravure ionique focalisée, suivies d'une technique de gravure.

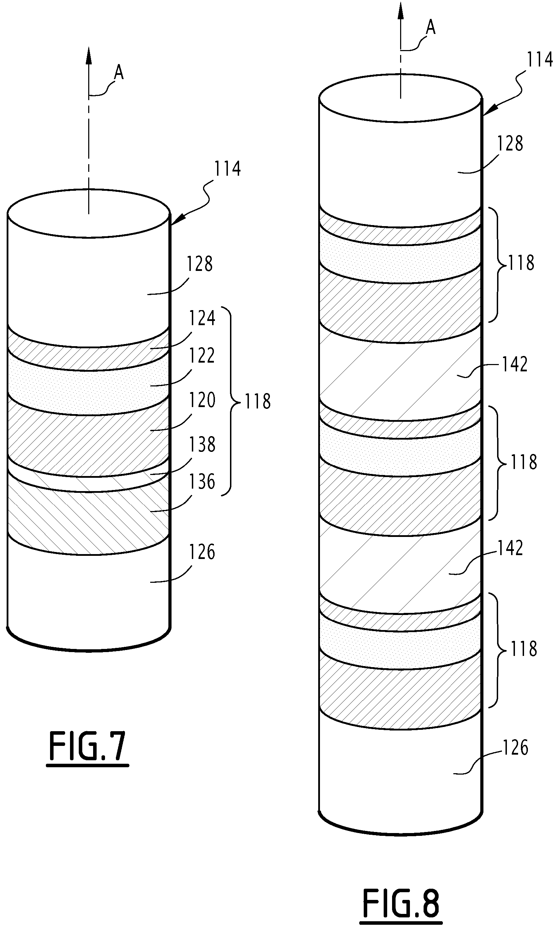

Dans une première variante de l'oscillateur magnétique, représentée à la figure 7, en plus de comporter des première et seconde couches ferromagnétiques 120 et 124, ainsi qu'une couche intermédiaire 122 située entre la première couche et la seconde couche, le motif 118 du nanopilier 114 de cet oscillateur comporte un troisième élément magnétique 136. Cet élément 136 peut être une simple couche ferromagnétique ayant une aimantation fixe et uniforme. Une alternative pour cet élément 136 est un ensemble de deux couches ferromagnétiques couplées par couplage d'échange et biaisées par une couche antiferromagnétique, connu par l'homme du métier sous l'appellation « antiferromagnétique synthétique » (SAF en anglais). Dans tous les cas, ce troisième élément 136 joue le rôle de détecteur.

Favorablement, cette troisième couche magnétique 136 est située au-dessous de la première couche 120 ou au-dessus de la seconde couche 124, le long de l'axe A, et est séparée de celle-ci par une couche de séparation 138. La couche de séparation 138 est réalisée en un matériau métallique tel que Ru, Cu et a une épaisseur d'environ 1 nm.

Dans une seconde variante, représentée à la figure 8, le motif élémentaire 118 du nanopilier 114 de la figure 6 (constitué par une première couche ferromagnétique 120, une couche intermédiaire non magnétique 122 et une seconde couche ferromagnétique 124) est répété au moins une seconde fois selon la direction A du nanopilier 114. De même, dans une alternative à cette seconde variante, le motif élémentaire qui est répété est constitué par le motif 118 présenté sur la figure 7.

A l'intérieur du nanopilier 114, les motifs sont séparés les uns des autres par une couche de séparation 142. Celle-ci est réalisée en un matériau métallique.

Les oscillateurs précédemment présentés peuvent être agencés de différentes manières pour former une couche de neurones 102.

Selon un exemple, les oscillateurs sont placés en ligne. Dans un tel cas, les oscillateurs ne sont pas connectés électriquement.

Selon un autre exemple, les oscillateurs sont placés en ligne et connectés dans le but de réaliser un multiplexage des signaux de sortie des oscillateurs.

Selon une variante représentée à la figure 9, N nanopiliers 114, chacun identique à celui de la figure 6, celui de la figure 7 ou celui de la figure 8 (ou leurs variantes), sont disposés périodiquement sur un substrat plan 144. Un réseau à deux dimensions de nanopiliers 114 est alors généré. Dans un tel cas, les moyens d'injection d'un courant d'alimentation sont des électrodes connectant les différents nanopiliers 114.

### CONCLUSION

Comme décrit précédemment, de multiples modes de réalisation sont possibles pour les neurones 106.

Toutefois, il est à noter que, de préférence, chaque oscillateur présente la même structure que les synapses 112 qui seront décrites ci-après. L'adaptation des signes de références utilisés ensuite à savoir C1, C2 et C3 à la description précédente étant immédiate, elle n'est pas détaillée dans ce qui suit.

Il en résulte que les remarques concernant les structures possibles pour un oscillateur s'appliquent également pour les synapses 112. Certaines sont répétées mais pas toutes dans un souci de pédagogie. Réciproquement, toutes les remarques concernant les structures possibles pour une synapse 112 s'appliquent également pour un oscillateur.

En particulier, les configurations présentées en référence aux figures 13 et 18 sont également valables pour les cas des synapses 112 lorsque de telles configurations sont accessibles à la structure décrite pour les synapses 112.

Pour la suite, il est supposé que chaque neurone 106 est un oscillateur propre à délivrer un signal ou des signaux hyperfréquence(s), tel qu'un courant radiofréquence ${I}_{i}^{RF} cos \left({ω}_{i}. t\right)$ où ${I}_{i}^{RF}$ est l'amplitude du courant et *ωᵢ* la fréquence du courant. Cependant, les considérations développées s'appliquent au cas où l'oscillateur délivre un signal stochastique ou télégraphique avec une amplitude ${I}_{i}^{RF}$ et une fréquence moyenne *ωᵢ.*

En outre, il est supposé que l'oscillateur est un oscillateur de type spintronique pour garantir l'obtention d'un réseau de neurones 100 ayant un faible encombrement.

### EXEMPLE 1 : ARCHITECTURE AVEC DIODES DE SPIN

### PREMIER CAS DE L'EXEMPLE 1 : RESEAU FIGE

Dans le cas illustré, le réseau de neurones 100 est un réseau de neurones figé.

Un réseau figé est un réseau dans lequel l'apprentissage est réalisé hors-ligne, c'est-à-dire que les valeurs des poids synaptiques sont déterminées grâce à l'entraînement d'un autre réseau de neurones, puis le réseau de neurones 100 est fabriqué pour implémenter les poids auparavant déterminés.

### PREMIER MODE DE REALISATION (M1)

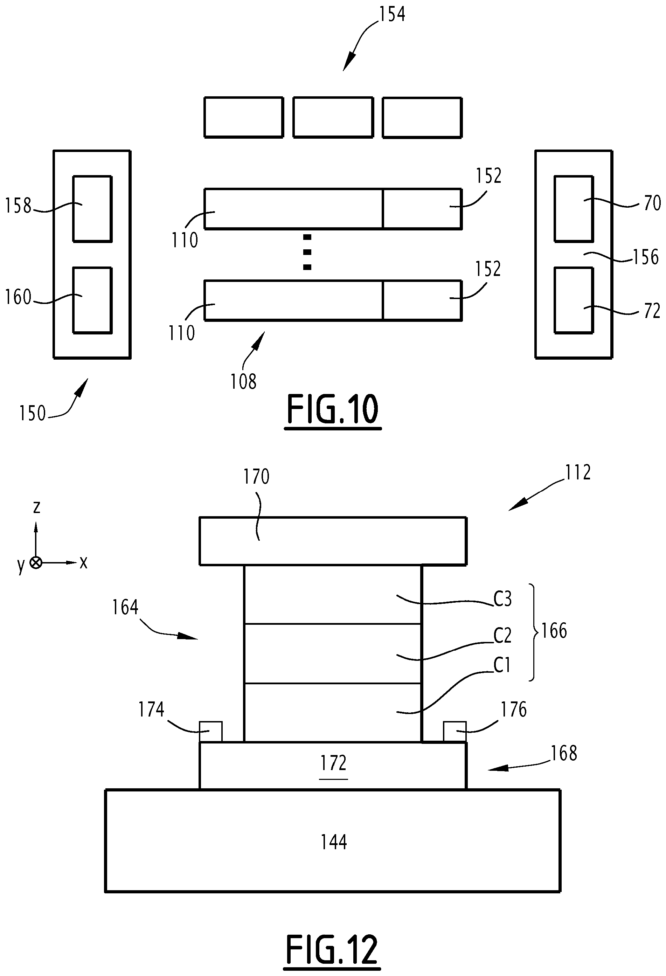

En plus, de l'ensemble 108 de chaînes 110, l'interconnexion 104 selon la figure 10 comporte aussi un circuit de prétraitement 150, des circuits de rectification 152, une pluralité de mémoires 154 et un circuit de post-traitement 156.

Le circuit de prétraitement 150 est propre à assurer l'interface entre la couche amont de neurones 102^{(k)} et l'entrée des chaînes 110.

Selon l'exemple illustré, le circuit de prétraitement 150 comporte un multiplexeur 158 et un amplificateur radiofréquence 160.

Un multiplexeur est un circuit permettant de concentrer sur une même voie de transmission différents types de signaux.

Un amplificateur est un système électronique augmentant la tension et/ou l'intensité d'un signal électrique.

En variante, le circuit de prétraitement 150 comporte seulement l'un parmi le multiplexeur 158 et l'amplificateur 160.

Selon encore un autre mode de réalisation, aucun circuit de prétraitement 150 n'est présent dans le réseau de neurones 100.

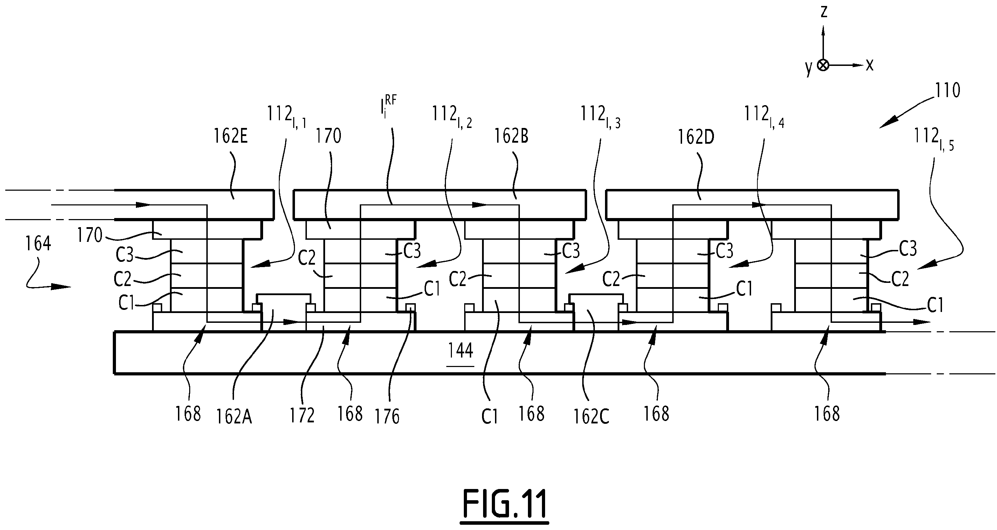

Les chaînes 110 sont représentées plus précisément en référence aux figures 11 à 21.

Comme visible à la figure 11, chaque chaîne 110 comporte des synapses 112 et au moins une ligne de transmission 162.

Les synapses 112 sont agencées les unes à côté des autres selon la première direction transversale X, direction le long de laquelle s'étendent les chaînes 110.

Dans l'exemple proposé, seules cinq synapses 112 sont représentées.

Chaque synapse 112 comporte un résonateur spintronique 164.

Un résonateur est un composant électrique présentant une fréquence de résonance. Plus précisément la réponse d'un résonateur à un signal radiofréquence est plus élevée dans une certaine gamme autour de la fréquence de résonance.

Un résonateur spintronique est un résonateur magnéto-résistif.

Plus précisément, un résonateur spintronique est un composant électrique comportant une ou plusieurs couches ferromagnétiques et dont l'aimantation de l'une au moins des couches peut être mise en précession résonante par un signal radiofréquence. La précession de l'aimantation entraîne une variation de la résistance du résonateur par effet magnéto-résistif. La fréquence de résonance du résonateur dépend des dimensions de la couche ferromagnétique, du champ magnétique qui est appliqué sur la couche ferromagnétique et du ou des matériaux ferromagnétiques qui forme(nt) la couche ferromagnétique.

Alternativement, la dynamique d'aimantation du résonateur peut être due ou assistée par des fluctuations thermiques. Dans ce cas, on dit que le résonateur est superparamagnétique.

Il est défini pour chaque synapse 112_{l,m} une fréquence de résonance propre notée ω_{l,m}.

Dans le cas illustré, les synapses 112_{l,m} d'une même chaîne 110 présentent toutes des fréquences de résonance ω_{l,m} distinctes deux à deux.

Selon une autre variante, il est possible que certaines fréquences de résonance ω_{l,m} soient identiques.

En outre, sous les hypothèses précitées que les entiers N^{(k)}, L^{(k→k+1)} et *M*^{*L*(*k*→k+1)} sont égaux, au sein d'une chaîne 110*ₗ* , il existe une relation biunivoque entre les synapses 112_{l,m} de la chaîne 110*ₗ* considérée et les neurones 106*ᵢ* de la couche amont 102^{(k}). Du fait de cette relation, pour la suite, il peut être considéré que l'entier m et l'entier i dans ce cas particulier sont les mêmes, la transposition au cas où les synapses 112_{l,m} d'une chaîne 110*ₗ* sont ordonnées différemment étant immédiate.

Autrement formulé, chaque synapse 112_{l,i} d'une chaîne 110*ₗ* est propre à interagir avec un seul neurone 106*ᵢ* de la couche amont 102^{(k)} et le signal de sortie *yᵢ* de chaque neurone 106*ᵢ* de la couche amont 102^{(k)} interagit avec une seule synapse 112_{l,i} d'une chaîne 110*ₗ* . Plus précisément, une synapse 112_{l,i} est propre à moduler le signal de sortie *yᵢ* du neurone 106*ᵢ*.

La fréquence de résonance ω_{l,i} de la synapse 112_{l,i} est alors relativement proche de la fréquence d'oscillation ωᵢ. Typiquement, le rapport entre la fréquence de résonance ω_{l,i} et la fréquence d'oscillation ωᵢ est inférieure à 1%.

Du point de vue du réseau de neurones 100, la modulation du signal de sortie *yᵢ* de chaque neurone 106*ᵢ* s'interprète comme un poids synaptique W.

Le poids synaptique W correspondant à la modulation du signal de sortie *yᵢ* du i-ième chaque neurone 106*ᵢ* de la couche amont 102^{(k)} par la i-ième synapse 112_{l,i} de la I-ième chaîne 110_{l,i} est notée W_{i,l}.

Le poids synaptique W_{i,l} est une fonction de la fréquence de résonance ω_{l,m} de la synapse 112_{l,m} et de la fréquence d'oscillation ωᵢ du neurone 106*ᵢ* .

Plus précisément, le poids synaptique W_{i,l} s'écrit comme une fonction f du rapport entre la fréquence de résonance ω_{l,i} de la synapse 112_{l,m} et de la fréquence d'oscillation ωᵢ du neurone 106*ᵢ* .

La structure d'une synapse 112 est décrite plus en détail en référence à la figure 12.

La synapse 112 comporte un empilement 166 de plusieurs couches superposées le long d'une direction d'empilement, une première borne 168 et une deuxième borne 170.

La direction d'empilement est symbolisée sur les figures par l'axe Z. La direction d'empilement est donc désignée par l'expression « direction d'empilement Z » dans le reste de la description.

Il est également défini une première direction transversale. Comme visible sur les figures 11 et 12, la première direction transversale est perpendiculaire à la direction d'empilement Z et contenue dans le plan de la feuille. La première direction transversale est symbolisée sur les figures par un axe X. La première direction transversale est donc désignée par l'expression « première direction transversale X » dans le reste de la description.

Une deuxième direction transversale est également définie comme étant perpendiculaire à la direction d'empilement Z et à la première direction transversale X. La deuxième direction transversale est symbolisée sur les figures par un axe Y. La deuxième direction transversale est donc désignée par l'expression « deuxième direction transversale Y » dans le reste de la description.

L'empilement 166 comporte trois couches : une première couche C1, une deuxième couche C2 et une troisième couche C3.

La première couche C1 sera par la suite dénommée plot de référence.

La première couche C1 présente une aimantation, dite aimantation de référence.

La première couche C1 est une couche en un premier matériau MAT1.

Le premier matériau MAT1 est un matériau ferromagnétique.

Le premier matériau MAT1 est, par exemple, un alliage de métaux de transition ferromagnétiques (aussi appelés métaux ferromagnétiques 3d). A titre d'illustration, NiFe, CoFe, CoFeB, CoNi, CoPt, FePt sont de tels alliages de métaux de transition ferromagnétiques.

En variante, le premier matériau MAT1 est un alliage d'Heusler. Un alliage de Heusler est un alliage métallique ferromagnétique basé sur une phase de Heusler, une phase intermétallique de composition particulière, de structure cristallographique cubique à faces centrées.

Selon encore une autre variante, le premier matériau MAT1 est un alliage de terres rares. Les terres rares sont un groupe de métaux aux propriétés voisines comprenant le scandium Sc, l'yttrium Y, et les quinze lanthanides comprenant les 15 éléments allant du lanthane au lutécium dans la classification périodique.

La deuxième couche C2 est intercalée entre la première couche C1 et la troisième couche C3 selon la direction d'empilement Z.

La deuxième couche C2 est une couche barrière.

La deuxième couche C2 est une couche en un deuxième matériau MAT2.

Le deuxième matériau MAT2 est un matériau non magnétique.

Dans le cas décrit, le deuxième matériau MAT2 est un métal

Le deuxième matériau MAT2 est, par exemple, du cuivre (Cu), du ruthénium (Ru) ou de l'or (Au).

Dans un tel cas, la synapse 112 forme une « vanne de spin ». Une vanne de spin est un composant, comportant deux couches de matériaux magnétiques conducteurs ou plus, dont la résistance électrique peut être modifiée entre plusieurs valeurs en fonction de l'angle relatif entre les aimantations des couches.

La troisième couche C3 sera dénommée par la suite plot de résonance.

La troisième couche C3 présente une aimantation.

La troisième couche C3 est une couche en un troisième matériau MAT3.

Le troisième matériau MAT3 est un matériau ferromagnétique.

Les mêmes exemples que pour le premier matériau MAT1 sont également valables pour le troisième matériau MAT3.

Selon les cas de figure envisagés, le premier matériau MAT1 et le troisième matériau MAT3 sont distincts ou identiques.

En variante, l'empilement 166 comporte des couches additionnelles comme décrit dans le cas des oscillateurs.

A titre d'exemple, il est possible que la première couche C1 comporte deux couches ferromagnétiques couplées par couplage d'échange et biaisées par une couche antiferromagnétique, connu par l'homme du métier sous l'appellation « antiferromagnétique synthétique » (SAF en anglais).

Selon un autre exemple, une ou plusieurs couches C1, C2 et C3 de l'empilement 166 présente une structure avec une pluralité de couches pour les besoins de croissance des couches C1, C2 et C3 à former.

La première borne 168 comporte une base 172, un premier contact électrique 174 et un deuxième contact électrique 176.

Selon l'exemple décrit, la base 172 est en contact avec la première couche C1.

Dans le cas où des couches additionnelles sont présentes, il n'y a plus de contact physique mais la première couche C1 est reliée à la base 172.

Chaque contact électrique 174 et 176 est agencé à une extrémité respective de la base 172, de part et d'autre de l'empilement 166 de couches selon la première direction transversale X.

La deuxième borne 170 est reliée à la troisième couche C3.

Dans le cas de la figure 12, le résonateur 164 est selon une géométrie dite CCP c'est-à-dire que le courant alimentant le résonateur 164 est injecté perpendiculairement aux couches C1, C2 et C3.

Dans la figure 11, la connexion électrique entre les différentes synapses 112 est une connexion série spécifique qui sera appelée dans la suite une connexion alternée.

L'ensemble des connexions électriques entre les différentes synapses 112 forme la ligne de transmission 162.

Depuis la gauche vers la droite de la figure 11, la borne 168 de la première synapse 112_{l,1} est reliée à la borne 168 de la deuxième synapse 112_{l,2} par une première portion 162A de la ligne de transmission 162 ; la borne 170 de la deuxième synapse 112_{l,2} est reliée à la borne 170 de la troisième synapse 112_{l,2} par une deuxième portion 162B de la ligne de transmission 162 ; la borne 168 de la troisième synapse 112_{l,3} est reliée à la borne 168 de la quatrième synapse 112_{l,4} par une troisième portion 162C de la ligne de transmission 162, et la borne 170 de la quatrième synapse 112_{l,4} est reliée à la borne 170 de la cinquième synapse 112_{l,5} par une quatrième portion 162D de la ligne de transmission 162.

L'ensemble de chaque portion 162A, 162B, 162C et 162D forme la ligne de transmission 162. Dans l'exemple représenté, la ligne de transmission 162 comporte en outre une portion additionnelle 162E. La première portion additionnelle 162E est reliée à la borne 170 de la première synapse 112_{l,1}.

La connexion est alternée en ce sens qu'une synapse 112 située entre deux synapses 112 est reliée à la synapse 112 aval par une portion de ligne reliant les premières bornes 168 alors que la synapse 112 considérée est également reliée à la synapse 112 amont par une portion de ligne reliant les deuxièmes bornes 170. Une alternance des bornes 168 ou 170 est bien présente.

Dans un tel exemple, la synapse 112 est également propre à rectifier une partie du signal radiofréquence parcourant la ligne de transmission 162, de sorte que le circuit de rectification 152 et la synapse 112 sont confondus.

Du point de vue fonctionnel, la ligne de transmission 162 a ainsi un double rôle : injection du courant radiofréquence provenant de la couche de neurones précédente et collection de la somme des tensions rectifiées par les synapses 112 de la chaîne.

Les mémoires 154 sont des mémoires spintroniques.

De préférence, les mémoires 154 sont des assemblages de couches présentant la même structure que les synapses 112.

En particulier, les mémoires ST-MRAM (de l'anglais « Spin-torque Magnetic Random Access Memories ») sont basées sur des jonctions tunnel magnétiques. De telles mémoires sont compatibles avec des résonateurs basés sur des vannes de spin et des jonctions tunnel magnétiques et peuvent être utilisées pour réaliser les mémoires 154.

Le circuit de post-traitement 156 est propre à assurer l'interface entre la sortie des chaînes 110 et la couche aval de neurones 102^{(k+1)}.

Selon l'exemple illustré, le circuit de post-traitement 156 comporte une mémoire spintronique 70 et un amplificateur de signaux continus 72.

En variante, le circuit de post-traitement 156 comporte seulement l'un parmi la mémoire spintronique 70 et l'amplificateur 72.

Selon encore un autre mode de réalisation, aucun circuit de post-traitement 156 n'est présent dans le réseau de neurones 100.

En fonctionnement, le courant radiofréquence (multiplexé et amplifié dans le cas décrit) venant des neurones 106 est appliqué aux synapses 112 simultanément par injection directe à travers la ligne de transmission 162. Dans cette implémentation, ceci revient à injecter directement le courant radiofréquence à travers le résonateur 164.

Lorsqu'un courant radiofréquence ${I}_{i}^{RF} cos \left({ω}_{i}. t\right)$ est appliqué sur un résonateur 164 implémentant une synapse 112_{l,m}, la combinaison des effets de transfert de spin, de couples spin-orbite (effet Hall de spin ou effet Rashba) et de champs créé par le courant va entraîner une précession de l'aimantation de la troisième couche C3.

Alternativement, la précession de la troisième couche C3 peut être due à des ondes de spin émises par des neurones de la couche précédente.

Alternativement la dynamique de la troisième couche C3 peut être due aux fluctuations thermiques si le résonateur est superparamagnétique. La description suivante décrit le cas des résonateurs harmoniques mais la dérivation au cas des résonateurs superparamagnétiques est immédiate.

En outre, il est à noter que chaque résonateur 164 peut fonctionner selon l'une des configurations magnétiques illustrées par les figures 13 à 18, donc notamment selon des configurations avec vortex. Cette observation s'applique à toutes les structures qui seront décrites dans la suite de la demande.

L'amplitude de la précession est d'autant plus grande que l'amplitude du courant radiofréquence ${I}_{i}^{RF}$ est élevée et que la fréquence *ωᵢ* est proche de la fréquence de résonance *ω*_{*l*,*m*} de la troisième couche C3.

Dans le régime linéaire des faibles perturbations, l'amplitude de l'oscillation *θ* de la précession est proportionnelle au courant radiofréquence.

Comme le résonateur 164 est un élément magnéto-résistif, la résistance du résonateur 164 dépend directement de l'amplitude de l'oscillation *θ* de la précession de l'aimantation. Il en résulte que la résistance du résonateur 164 oscille également.

Comme le courant radiofréquence injecté et la résistance du résonateur 164 oscillent à la même fréquence (ou à des fréquences proches), une tension continue (c'est-à-dire rectifiée) apparaît entre les deux bornes du résonateur 164. Ce phénomène est appelé diode de spin.

Il est à noter que lorsque l'effet de diode de spin est utilisé dans le contexte d'un procédé de détection, l'effet de diode de spin est parfois dénommé résonance ferromagnétique induite par transfert de spin (dénomination plus connue sous le sigle ST-FMR).

La tension rectifiée entre les deux bornes du résonateur 164 s'exprime comme : ${V}_{DC}^{i} = \frac{1}{2} \frac{{\partial }^{2} V}{\partial {I}^{2}} {\left({I}_{i}^{RF}\right)}^{2} + \frac{{\partial }^{2} V}{\partial θ \partial I} \left〈{I}_{i}^{RF}\left(t\right)θ\left(t\right)\right〉$

Le premier terme $\frac{1}{2} \frac{{\partial }^{2} V}{\partial {I}^{2}} {\left({I}_{i}^{RF}\right)}^{2}$ correspond à une contribution purement électrique tandis que le deuxième terme $\frac{{\partial }^{2} V}{\partial θ \partial I} \left〈{I}_{i}^{RF}\left(t\right)θ\left(t\right)\right〉$ est le terme de diode de spin.

Le terme de diode de spin est proportionnel à ${\left({I}_{i}^{RF}\right)}^{2}$*.*

De plus, le terme de diode de spin est une somme pondérée d'une composante Lorentzienne et d'une composante anti-Lorentzienne correspondant aux variations de l'amplitude de l'oscillation de l'aimantation *θ* soit en phase soit en quadrature de phase avec le courant radiofréquence ${I}_{i}^{RF} \left(t\right)$*.*

Une fonction Lorentzienne *L*(*ω*₀*_{,} ω*) est définie par : $L \left({ω}_{0}, ω\right) = \frac{{ω}^{2}}{{\left({ω}_{0}^{2}-{ω}^{2}\right)}^{2} + {\left(Δω\right)}^{2}}$

Une fonction antiLorentzienne *L'*(*ω*₀*, ω*) est définie par : $L ′ \left({ω}_{0}, ω\right) = \frac{{\left({ω}_{0}^{2}-{ω}^{2}\right)}^{2}}{{\left({ω}_{0}^{2}-{ω}^{2}\right)}^{2} + {\left(Δω\right)}^{2}}$

Dans ces expressions, *ω*₀ est la fréquence de résonance et Δ est la largeur de bande du résonateur, correspondant à la largeur de la bande de fréquence dans laquelle la réponse du résonateur est élevée.

La composante anti-Lorentzienne du terme de diode de spin est prépondérante par rapport à la composante Lorentzienne lorsque le courant radiofréquence ${I}_{i}^{RF} \left(t\right)$ génère un champ magnétique. Dans la structure décrite, un champ magnétique est généré par le courant radiofréquence (champ d'Oersted) et par le couple de transfert de spin.

La composante anti-Lorentzienne est préférentiellement utilisée pour obtenir le poids synaptique de la synapse 112_{l,m} car, lorsque la fréquence de résonance du résonateur *ω_{l,m}* et la fréquence du neurone correspondant *ωᵢ* sont proches, la composante Lorentzienne de la tension rectifiée est proportionnelle au terme (*ωᵢ* - *ω_{l,m}*).

Il en résulte qu'il est possible d'obtenir aux bornes du résonateur 164 correspondant à la synapse 112_{l,m} une tension rectifiée positive ou négative proportionnelle à ${\left({I}_{i}^{RF}\right)}^{2}$ et proportionnelle à (*ωᵢ - ω_{l,m}*), correspondant à un poids synaptique positif ou négatif.

La connexion en série alternée des résonateurs 164 dans la chaîne 110ₗ permet de sommer les tensions rectifiées correspondant aux termes diode de spin de chaque synapse de la chaîne, tout en éliminant en grande partie les termes purement électriques tels que $\frac{1}{2} \frac{{\partial }^{2} V}{\partial {I}^{2}} {\left({I}_{i}^{RF}\right)}^{2}$*.*

Ainsi, la tension aux bornes de la ligne de transmission 162 parcourant l'ensemble de la chaîne 110ₗ est proportionnelle à la somme des carrés des signaux radiofréquences provenant des neurones 106^{(k-1)} de la couche précédente pondérée par la différence entre les fréquences des neurones 106^{(k)} et des synapses 112_{l,m} de la chaîne. La tension résultante peut ensuite être envoyée au circuit de post-traitement 156, puis alimenter le neurone 106ₗ^{(k+1)}, ce qui correspond à réaliser l'inférence.

Il est à noter que, de préférence, le réseau de neurones 100 est propre à mettre en œuvre une technique de compensation de la diminution avec la fréquence de l'amplitude de la résonance.

Par exemple, la compensation est mise en œuvre par les amplificateurs (première technique), en choisissant une géométrie spécifique de la ligne de transmission 162 (deuxième technique) ou par un choix judicieux de l'ordre des résonateurs 164 sur la ligne de transmission 162 (troisième technique). Le choix judicieux est d'ordonner les résonateurs 164 selon une fréquence décroissante

Dans un tel mode de réalisation, chaque neurone 106 et chaque synapse 112 occupe respectivement un espace limité, typiquement inférieur à 100 ×100 nm² pour chaque neurone 106 et chaque synapse 112. Il en résulte que le réseau de neurones 100 présente un plus grand nombre de neurones 106 et de synapses 112 par rapport aux réseaux de neurones connus de l'état de la technique. Cela permet d'obtenir un réseau de neurones 100 présentant des performances améliorées par rapport aux réseaux de neurones connus de l'état de la technique.

En particulier, l'implémentation proposée permet de réaliser un réseau de neurones 100 qui est un réseau de neurones profond et figé.

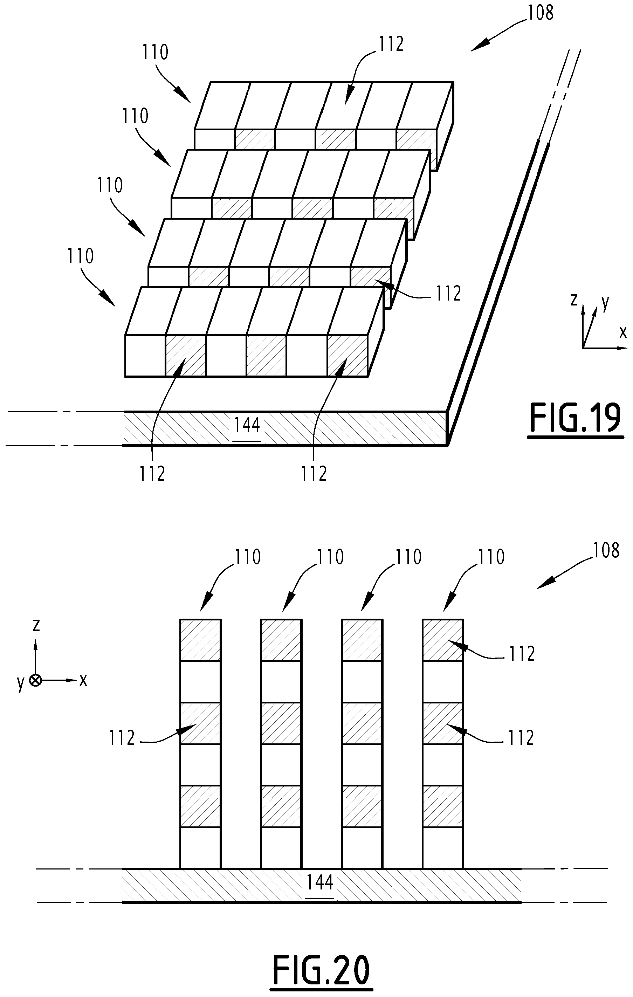

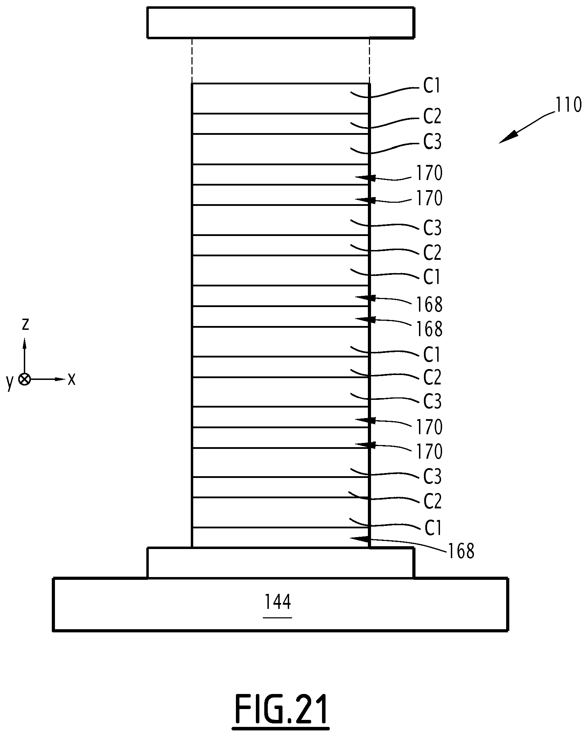

Par ailleurs, il est aisé de fabriquer de telles structures puisque des configurations horizontales ou verticales sont possibles comme représenté schématiquement aux figures 19 et 20. Par exemple, une chaîne verticale avec connexion en série alternée des résonateurs est représentée schématiquement à la figure 21 (alternative à la connexion horizontale de la figure 11).

En particulier, la fabrication de vannes de spin à couche métallique est particulièrement aisée.

En outre, du fait du caractère métallique, la résistance de chaque résonateur 164 est relativement faible. Cela entraîne qu'il est possible de placer de nombreux résonateurs 164 en série dans la ligne de transmission 162 sans que les résonateurs 164 induisent pour autant une atténuation trop forte du signal radiofréquence qui est injecté dans la ligne de transmission 162.

### DEUXIEME MODE DE REALISATION (M2)

Le réseau de neurones 100 selon le mode de réalisation M2 est décrit par différence avec le réseau de neurones 100 selon le mode de réalisation M1.

Cela signifie que les mêmes remarques que pour les éléments du réseau de neurones 100 selon le mode de réalisation M1 s'appliquent aux éléments du réseau de neurones 100 selon le mode de réalisation M2. Dans un souci de simplification, ces remarques ne sont pas répétées dans ce qui suit.

Similairement, le fonctionnement du réseau de neurones 100 selon le mode de réalisation M2 est similaire au fonctionnement du réseau de neurones 100 selon le mode de réalisation M1. Cela signifie que les mêmes remarques que pour le fonctionnement du réseau de neurones 100 selon le mode de réalisation M1 s'appliquent au fonctionnement du réseau de neurones 100 selon le mode de réalisation M2. Dans un souci de simplification, ces remarques ne sont pas répétées dans ce qui suit.

De plus, les avantages procurés par le réseau de neurones 100 selon le mode de réalisation M2 sont similaires aux avantages procurés par le réseau de neurones 100 selon le mode de réalisation M1. Cela signifie que les mêmes remarques que pour les avantages du réseau de neurones 100 selon le mode de réalisation M1 s'appliquent aux avantages du réseau de neurones 100 selon le mode de réalisation M2. Dans un souci de simplification, ces remarques ne sont pas répétées dans ce qui suit.

Seules les différences en termes de structure, de fonctionnement et d'avantages ont soulignées.

Dans ce qui suit, une telle situation où deux réseaux de neurones 100 selon deux modes de réalisation MX et MY sont similaires sera mis en évidence par la seule phrase « Le mode de réalisation MX est décrit par différence avec le mode de réalisation MY ».

En l'espèce, le mode de réalisation M2 est décrit par différence avec le mode de réalisation M1.

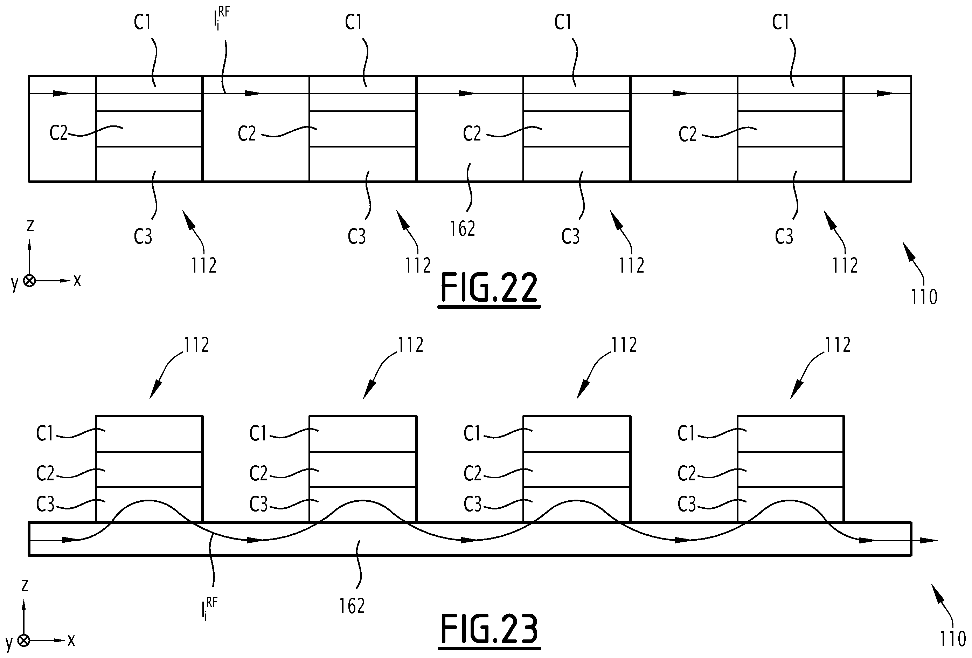

En référence aux figures 22 et 23, le résonateur 164 selon le mode de réalisation M2 est dans une configuration CIP, c'est-à-dire que le courant est injecté dans le plan des couches C1, C2 et C3.

Le deuxième matériau MAT2 est un métal.

Dans un tel cas, les deux contacts électriques 174 et 176 sont rattachés à la troisième couche C3.

Le réseau de neurones 100 selon le mode de réalisation M2 présente l'avantage d'être plus facile à réaliser que le réseau de neurones selon le mode de réalisation M1.

### TROISIEME MODE DE REALISATION (M3)

Le mode de réalisation M3 est décrit par différence avec le mode de réalisation M1.

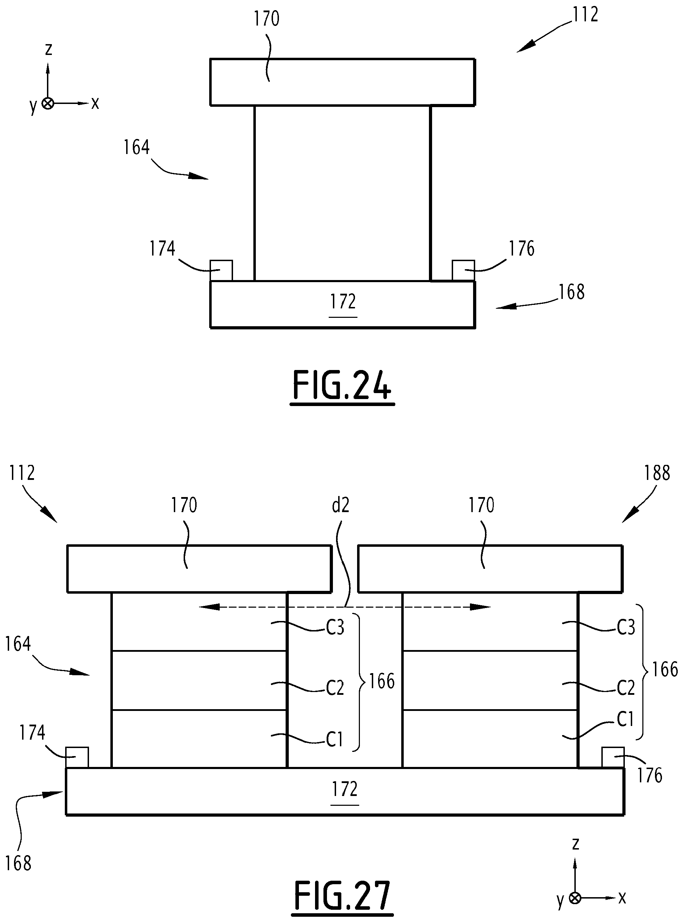

Comme représenté sur la figure 24, le résonateur 164 selon le mode de réalisation M3 est formé d'une unique couche C3 au lieu des trois couches C1, C2 et C3.

L'unique couche est une couche réalisée en un matériau magnétique.

Dans une telle structure, le fonctionnement d'une synapse 112 repose sur l'effet de magnéto-résistance anisotrope.

Dans une simple couche magnétique, la magnéto-résistance anisotrope qualifie les variations de résistance en fonction de l'angle que fait l'aimantation avec la direction du courant injecté.

Le réseau de neurones 100 selon le mode de réalisation M3 présente l'avantage d'être très aisé à réaliser.

### QUATRIEME MODE DE REALISATION (M4)

Le mode de réalisation M4 est décrit par différence avec le mode de réalisation M1.

Selon l'exemple du mode de réalisation M4, le deuxième matériau MAT2 est un isolant.

Dans un tel cas, le résonateur 164 est une jonction tunnel magnétique.

A titre d'exemple particulier, le deuxième matériau MAT2 est de l'oxyde de magnésium (MgO), de l'oxyde d'aluminium (Al₂O₃), du titano-zirconate de plomb (PZT), du ferrite de bismuth (BiFeO₃), du titanate de baryum (BaTiO₃) ou de l'oxyde d'hafnium (HfOx).

Le fonctionnement d'une jonction tunnel magnétique dans ce cas est similaire au fonctionnement d'une vanne de spin de sorte que le fonctionnement et les avantages du mode de réalisation M4 sont identiques aux fonctionnement et avantages du mode de réalisation M1.

Dans un tel cas, il est possible d'obtenir de plus grandes valeurs pour le signal rectifié (plus grand effet de diode de spin), ce qui permet de diminuer les besoins en amplification.

En outre, les jonctions tunnel magnétiques sont compatibles avec des mémoires spintroniques STT-MRAM.

### CINQUIEME MODE DE REALISATION (M5)

Le mode de réalisation M5 est décrit par différence avec le mode de réalisation M1.

Dans le mode de réalisation M5, le courant radiofréquence venant des neurones 106 est injecté dans une antenne ou une ligne de champ 182 placée à proximité du résonateur 164.

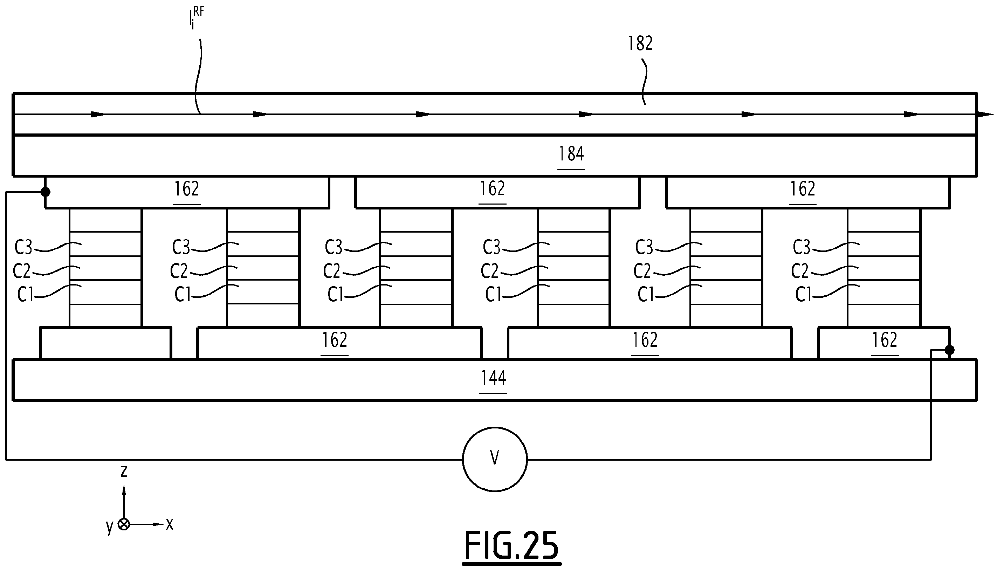

Selon l'exemple illustré par la figure 25, l'antenne ou la ligne de champ 182 forme une ligne de transmission en contact avec une couche intermédiaire 184. La couche intermédiaire 184 est en contact avec la deuxième borne 170. Il s'agit d'un isolant électrique tel que SiO₂, SiC, SiN ou AlOₓ.

Dans un tel cas, la ligne de transmission 162 joue uniquement le rôle de lecture (collection) des tensions rectifiées provenant des résonateurs 164.

Dans le cas illustré, le résonateur 164 est soit le résonateur 164 de la première structure (vanne de spin en configuration CPP, c'est-à-dire c'est-à-dire que le courant est injecté perpendiculairement au plan des couches C1, C2 et C3) soit une jonction tunnel magnétique, soit une vanne de spin en configuration CIP.

En fonctionnement, le résonateur 164 est fortement couplé à l'antenne 182 par effet capacitif de sorte qu'un fort courant radiofréquence est généré dans le résonateur 164.

Dans le mode de réalisation M5, il est ainsi évité toute atténuation du signal radiofréquence dû aux résonateurs en série dans la ligne de transmission 162 et il existe un bon découplage des signaux radiofréquences injectés dans l'antenne 182 par rapport aux signaux rectifiés mesurés dans la ligne de transmission 162.

### DEUXIEME CAS DE L'EXEMPLE 1 : RESEAU RECONFIGURABLE BINAIRE

Dans le cas illustré, le réseau de neurones 100 est un réseau de neurones reconfigurable binaire. Un réseau de neurones 100 reconfigurable binaire est un réseau capable d'une reconfiguration des poids sur uniquement deux valeurs. La reconfiguration d'un réseau permet au réseau de réaliser différentes tâches.

### SIXIEME MODE DE REALISATION (M6)

Le mode de réalisation M6 est décrit par différence avec le mode de réalisation M1.

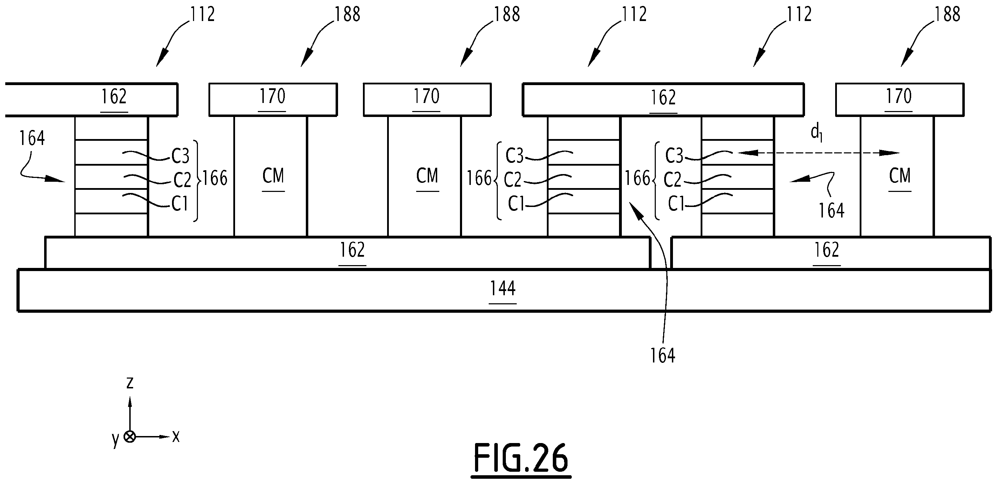

Le mode de réalisation M6 est notamment illustré à la figure 26.

Il est supposé que les résonateurs 164 présentent une aimantation uniforme, la transposition au cas d'une aimantation vortex étant immédiate.

Chaque synapse 112 comporte un élément d'ajustement de la fréquence de résonance 188.

L'élément d'ajustement 188 est propre à générer un champ magnétique sur le résonateur 164.

Plus précisément, le champ magnétique que l'élément d'ajustement 188 est propre à générer est selon l'axe d'aimantation.

L'élément d'ajustement 188 comporte un empilement 166 de couches selon la direction d'empilement Z, une première borne 168 et une deuxième borne 170.

L'empilement 166 comporte au moins une couche ferromagnétique CM.

La couche ferromagnétique CM de l'élément d'ajustement 188 sera dénommée par la suite « plot de contrôle ».

La première borne 168 de l'élément d'ajustement 188 est confondue avec une portion 162A reliant deux premières bornes 168 d'une portion de la ligne de transmission 162.

La deuxième borne 170 de l'élément d'ajustement 188 est similaire à la deuxième borne 170 du résonateur 164 de la première structure du premier exemple. Les mêmes remarques s'appliquent donc pour l'empilement 166 de l'élément d'ajustement 188 et ne sont pas répétées ici.

La deuxième borne 170 n'est reliée à aucune portion de la ligne de transmission 162.

La distance entre la troisième couche C3 de l'empilement 166 du résonateur 164 et la couche ferromagnétique CM définie comme la distance entre les centres de gravité des deux couches le long de la première direction transversale X est appelée première distance d₁.

En fonctionnement, au niveau d'une synapse 112, l'élément d'ajustement 188 génère un champ magnétique sur le résonateur 164.

Le champ magnétique appliqué sur l'empilement 166 du résonateur 164 dépend de la première distance d₁, de l'aimantation de l'élément d'ajustement 188 et de la géométrie de l'élément d'ajustement 188.

L'aimantation de l'élément d'ajustement 188 est modifiée par transfert de spin en injectant des impulsions de courant entre les deux bornes 168 et 170 de l'élément d'ajustement.

Comme pour le cas du mode de réalisation M1, l'aimantation du résonateur 164 est fixe. Du fait du positionnement de l'élément d'ajustement 188, l'aimantation de la couche ferromagnétique CM du résonateur 164 ne voit pas le même profil de champ magnétique selon le sens que l'aimantation de la troisième couche C3 du résonateur 164 prend par rapport à première direction transversale X.

Cela entraîne que le résonateur 164 présente deux fréquences de résonance ω_{l,m,1} et ω_{l,m,2} différentes. Ces deux fréquences de résonance correspondent à deux valeurs différentes du poids synaptique de la synapse 112_{l,m}.

En variante, l'aimantation de l'élément d'ajustement 188 est modifiée par transfert de spin et injection d'un courant radiofréquence à la fréquence de résonance de la couche ferromagnétique CM entre les bornes 168 et 170.

Similairement au fonctionnement précédent, deux fréquences de résonance ω_{l,m,1} et ω_{l,m,2} différentes du résonateur 164 sont obtenues.

Dans ce cas, il est à noter qu'une fois que l'aimantation de l'élément d'ajustement 188 a été modifiée, le courant radiofréquence est coupé du fait que l'aimantation de l'élément d'ajustement 188 est en position d'équilibre.

Selon un autre mode de réalisation, l'élément d'ajustement 188 est alimenté en courant à travers la deuxième borne 170 de manière à générer un effet Hall de spin résultant par transfert de spin en une modification de l'orientation de l'aimantation de la couche ferromagnétique CM.

Dans chaque mode de réalisation, il est à noter qu'une fois l'orientation de l'aimantation commutée, le courant de charge fourni à l'élément d'ajustement 188 peut être coupé, l'aimantation étant en position d'équilibre.

### SEPTIEME MODE DE REALISATION (M7)

Le mode de réalisation M7 est décrit par différence avec le mode de réalisation M6.

Le mode de réalisation M7 est notamment illustré à la figure 27.

Dans le cas du mode de réalisation M7, l'empilement 166 de l'élément d'ajustement 188 est similaire à l'empilement 166 du résonateur 164 du mode de réalisation M1 ou du mode de réalisation M5.

De préférence, pour faciliter la fabrication, les matériaux des couches de l'empilement 166 de l'élément d'ajustement 188 sont identiques aux matériaux de l'empilement 166 du résonateur 164.

La troisième couche C3 de l'élément d'ajustement 188 est souvent dénommée « plot de contrôle ».

La première borne 168 de l'élément d'ajustement 188 est confondue avec une portion 162A reliant deux premières bornes 168 d'une portion de la ligne de transmission 162

La deuxième borne 170 de l'élément d'ajustement 188 est similaire à la deuxième borne 170 du résonateur 164 de la première structure du premier exemple. Les mêmes remarques s'appliquent donc pour l'empilement 166 de l'élément d'ajustement 188 et ne sont pas répétées ici.

La deuxième borne 170 n'est reliée à aucune portion de la ligne de transmission 162.

De préférence, la troisième couche C3 de l'élément d'ajustement 188 est agencée en vis-à-vis de la troisième couche C3 du résonateur 164.

La distance entre les deux couches C3 définie comme la distance entre les centres de gravité des deux couches le long de la première direction transversale X est appelée deuxième distance d₂.

### HUITIEME MODE DE REALISATION (M8)

Le mode de réalisation M8 est décrit par différence avec le mode de réalisation M6.

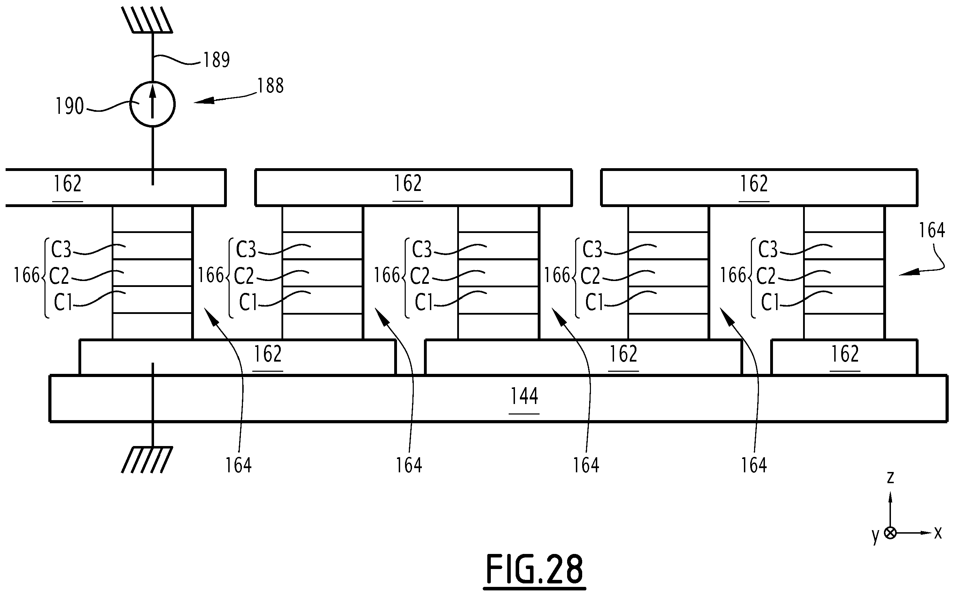

Le mode de réalisation M8 est notamment illustré à la figure 28.

Dans le cas du mode de réalisation M8, le résonateur 164 est le résonateur 164 des modes de réalisation M1, M2, M3 ou M4. Chaque résonateur 164 dispose d'un élément d'ajustement 188.

En outre, l'élément d'ajustement 188 est un ensemble de liaisons 189 et un générateur de courant ou de tension 190.

Chaque liaison 189 est une liaison spécifique à un résonateur 164.

En fonctionnement, le générateur 190 applique des séquences de courant ou de tension permettant de modifier l'orientation de l'aimantation de la troisième couche C3 par transfert de spin ou effet Hall de spin.

Comme le plot de référence C1 génère un champ magnétique sur le plot résonant C3, il en résulte deux fréquences de résonance pour chaque résonateur 164.

En outre, il est à noter que le courant peut être ensuite coupé car l'aimantation est ensuite en position d'équilibre.

Le mode de réalisation M8 est plus aisé à réaliser que les modes de réalisation M6 et M7.

Lorsqu'il n'y a pas un accès individuel à chaque résonateur 164, il est possible néanmoins de renverser sélectivement l'aimantation d'un résonateur 164 spécifique en rajoutant à l'impulsion qui génère le transfert de spin ou l'effet Hall de spin un courant radiofréquence à la fréquence de résonance ω_{l,m} du résonateur 164.

### TROISIEME CAS DE L'EXEMPLE 1 : RESEAU CAPABLE D'APPRENTISSAGE

### NEUVIEME MODE DE REALISATION (M9)

Dans le cas illustré, le réseau de neurones 100 est un réseau de neurones capable d'apprentissage par une variation quasi-continue de la valeur de ses poids.

Le mode de réalisation M9 est décrit par différence avec le mode de réalisation M1.

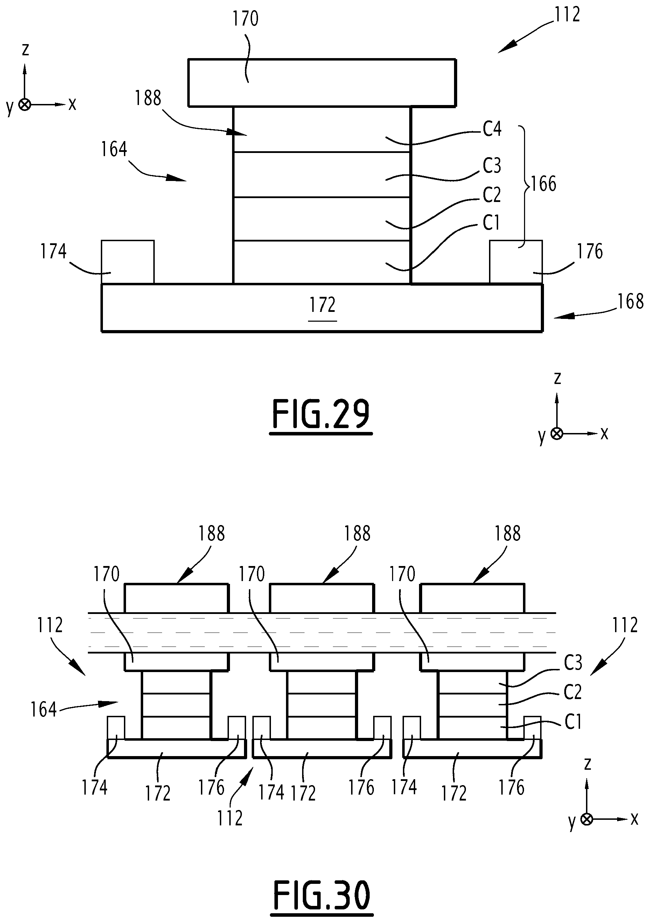

Le mode de réalisation M9 est notamment illustré à la figure 29.

Selon l'exemple illustré, l'élément d'ajustement 188 est une quatrième couche C4.

La quatrième couche C4 fait partie de l'empilement 166 d'une synapse 112.

En variante, la quatrième couche C4 est placée à proximité de la troisième couche C3 de l'élément d'ajustement 188, à une distance telle que la quatrième couche C4 ait une influence sur l'aimantation de la troisième couche C3 de la synapse 112.

La quatrième couche C4 est réalisée en un quatrième matériau MAT4 présentant une propriété contrôlable par l'application d'une tension électrique ou d'un courant électrique sur la quatrième couche C4.

Pour la suite, il est supposé que la propriété dépend de la tension électrique appliquée sur la quatrième couche C4.

La propriété est, par exemple, une propriété ferroélectrique ou une propriété magnétique ou une propriété mécanique ou une propriété structurelle.

La variation de la propriété sous l'effet de la tension ou du courant peut résulter d'un phénomène de migration de lacunes d'oxygène. Dans un tel cas, la quatrième couche C4 présente un certain degré d'oxydation impliquant la présence d'ions oxygène. L'application d'un champ électrique provoque le déplacement d'ions oxygène du fait de leur charge. Ce déplacement est une migration. L'effet de migration est d'autant plus fort à l'interface entre la troisième couche C3 et la quatrième couche C4 où le champ électrique est augmenté du fait de la brisure de symétrie. Comme l'anisotropie magnétique dite d'interface est très dépendante de l'oxygène à l'interface, il devient possible de faire varier l'anisotropie magnétique, et donc la fréquence de résonance de la troisième couche C3 en modifiant la teneur en oxygène de l'interface entre la troisième couche C3 et la quatrième couche C4 en appliquant un champ électrique à la quatrième couche C4.

En variante, la variation de la propriété sous l'effet de la tension ou du courant peut résulter d'un phénomène de création de filaments conducteurs par diffusion ionique ou atomique. Après application d'un fort champ électrique sur la quatrième couche C4, des migrations d'ions ou d'atomes peuvent se produire. Dans un tel cas, les migrations se propagent sous la forme de filaments (et non sous forme d'un front de diffusion). Selon la valeur de l'amplitude du champ électrique appliqué, les filaments génèrent un pont plus ou moins conducteur entre la troisième couche C3 et la quatrième couche C4. Il en résulte une modification locale de la charge d'espace à l'interface entre la troisième couche C3 et la quatrième couche C4 qui modifie, en moyenne, l'anisotropie magnétique d'interface de la troisième couche C3.

Selon un autre mode de réalisation, la variation de la propriété sous l'effet de la tension ou du courant résulte d'une modification de la configuration de la polarisation électrique.

En variante, la variation de la propriété sous l'effet de la tension ou du courant est générée par une modification de la configuration de la maille atomique.

Selon encore un autre mode de réalisation, la variation de la propriété sous l'effet de la tension ou du courant résulte d'un phénomène de modification de la cristallinité. Dans ce cas, l'application d'un champ électrique créé un courant apte à faire fondre le matériau vers une phase amorphe (désordre de la maille atomique) ou au contraire le faire revenir à une configuration cristalline (ordre de la maille atomique). Ceci entraîne des contraintes mécaniques sur la troisième couche C3 qui peuvent changer à la fois l'amplitude de l'aimantation et l'anisotropie magnétique d'interface.

En résumé, le quatrième matériau MAT4 présente une propriété contrôlable par l'application d'une tension électrique ou d'un courant électrique sur la quatrième couche C4. La variation de la propriété sous l'effet de la tension ou du courant peut résulter d'au moins un phénomène parmi la migration de lacunes d'oxygène, la création de filaments conducteurs par diffusion ionique ou atomique, la modification de la configuration de la polarisation électrique, la modification de la configuration de la maille atomique et la modification de la cristallinité.

Un exemple de tel quatrième matériau MAT4 est un oxyde isolant.

Le TiOₓ, le TaOₓ le AlOx et le HfOₓ sont des exemples d'oxyde isolant.

Selon un autre exemple, le quatrième matériau MAT4 est un matériau ferroélectrique et piézoélectrique.

Le PZT, le BiFeO₃, BaTiO₃ sont des exemples de matériaux ferroélectriques et piézoélectriques.

En variante, le quatrième matériau MAT4 est un matériau à changement de phase.

Il peut être cité le VO₂, le V₂O₃ ou un chalcogénure tel que l'alliage de GeSbTe.

En fonctionnement, il est appliqué sur la quatrième couche C4 une impulsion de tension.

Cela entraîne une variation de la propriété de la quatrième couche C4 provoquant une modification de l'aimantation ou de l'anisotropie magnétique de la troisième couche C3.

La modification de l'anisotropie magnétique de la troisième couche C3 permet de changer la fréquence de résonance ω_{l,m} de la synapse 112_{l,m}.

La modification des caractéristiques (durée et/ou amplitude) de tension permet donc de modifier la valeur de la fréquence de résonance ω_{l,m} de la synapse 112_{l,m}.

Cela permet d'obtenir un ensemble continu de valeurs possibles pour la fréquence de résonance ω_{l,m} de la synapse 112_{l,m}, ce qui permet l'apprentissage.

### DIXIEME MODE DE REALISATION (M10)

Le mode de réalisation M10 est décrit par différence avec le mode de réalisation M6.

Le mode de réalisation M10 est notamment illustré à la figure 30.

Dans le cas du mode de réalisation M10, l'interconnexion 104 comporte un générateur de courant (non représenté sur cette figure) propre à appliquer en continu des courants.

L'élément d'ajustement 188 est un ensemble de lignes de contrôle.

Chaque ligne de contrôle est reliée au générateur de courant.

Chaque ligne de contrôle est perpendiculaire à la ligne de transmission 162 (omise sur cette figure).

En outre, chaque ligne de contrôle est agencée sur une plaque réalisée en un matériau isolant.

La plaque est en contact avec chaque deuxième borne 170 des résonateurs 164 faisant partie d'une même chaîne synaptique 110.

Les mémoires 154 sont, en outre, propres à mémoriser la valeur de l'amplitude du courant appliqué à chaque ligne de contrôle.

Dans cet exemple, les mémoires 154 sont des cellules de mémoires commandées par transfert de spin (ST MRAM).

Comme expliqué précédemment, de telles mémoires 154 sont des vannes de spin ou des jonctions tunnel magnétiques ayant une structure semblable au résonateur 164. Idéalement, les mémoires 154 et les résonateurs 164 sont identiques en termes de structure.

De préférence, chaque mémoire 154 est réalisée avec les mêmes matériaux et les mêmes empilements que les résonateurs 164 pour faciliter la fabrication de l'interconnexion 104.

En fonctionnement, l'application d'un courant génère un champ magnétique sur le résonateur 164 correspondant.

La modification des caractéristiques du courant permet donc de modifier continûment la valeur de la fréquence de résonance ω_{l,m} de la synapse 112_{l,m}.

Par ailleurs, il est à noter que les valeurs de l'amplitude du courant appliqué à chaque ligne de contrôle sont mémorisées dans une mémoire 154 respective. Cela permet de connaître la valeur de la fréquence de résonance ω_{l,m} de la synapse 112_{l,m} et par là, le poids synaptique de la synapse 112_{l,m} considérée.

### ONZIEME MODE DE REALISATION (M11)

Le mode de réalisation M11 est décrit par différence avec le mode de réalisation M10.

Chaque ligne de contrôle est reliée directement à la deuxième borne 170 du résonateur 164 à laquelle la ligne de contrôle est associée au résonateur 164.

Dans un tel cas, chaque ligne de contrôle est réalisée en un métal possédant un fort effet Hall de spin.

Dans un tel cas, l'application du courant à travers la deuxième borne 170 sur le résonateur 164 entraîne un courant de spin à travers la troisième couche C3 par effet Rashba ou par effet Hall de spin ayant pour conséquence de modifier la valeur de la fréquence de résonance ω_{l,m} de la synapse 112_{l,m}.

L'effet Rashba est un éclatement des bandes de spins d'une couche qui dépend du moment appliqué. Cet effet est un effet combiné d'interaction spin-orbite et d'asymétrie du potentiel du cristal. Un tel effet est similaire à l'éclatement en particules et antiparticules prévu par le modèle résultant de l'emploi de l'Hamiltonien de Dirac.

En mécanique quantique, l'interaction spin-orbite est une interaction entre le spin d'une particule et le mouvement de la particule. L'interaction spin-orbite est aussi appelé effet spin-orbite ou couplage spin-orbite.

### DOUZIEME MODE DE REALISATION (M12)

Le mode de réalisation M12 est décrit par différence avec le mode de réalisation M7.

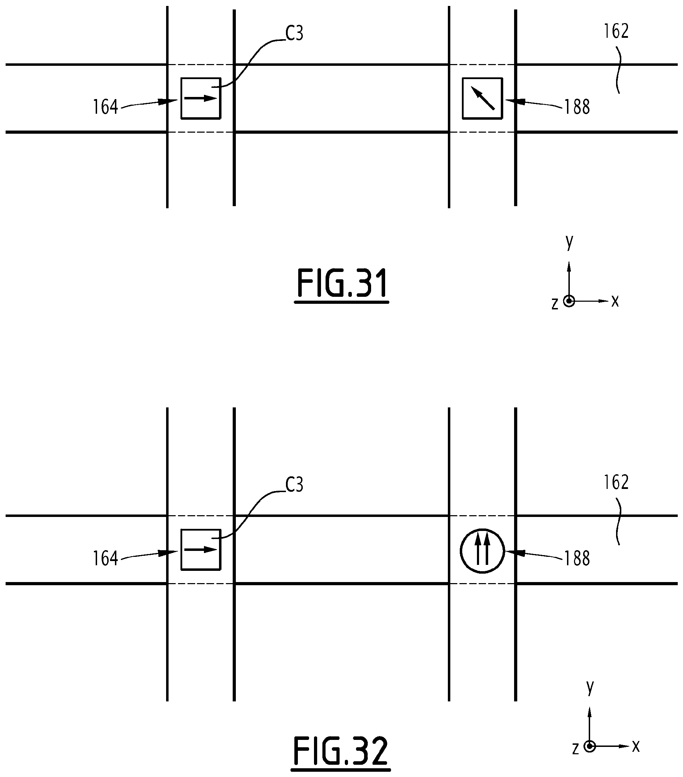

Le mode de réalisation M12 est notamment illustré à la figure 31.

En fonctionnement, similairement au mode de réalisation M10, un transfert de spin ou de couple spin-orbite contrôle l'orientation de l'aimantation de la troisième couche C3 de l'élément d'ajustement 188.

Toutefois, dans ce cas du mode de réalisation M12, le générateur de courant est propre à appliquer une pluralité d'amplitudes de courant de sorte que l'orientation de l'aimantation de la troisième couche C3 de l'élément d'ajustement 188 est continûment ajustable.

Les différentes valeurs d'amplitude du courant de charge sont mémorisées dans les mémoires 154.

Il est à noter qu'en variante, avec le même fonctionnement, le mode de réalisation M12 correspond au mode de réalisation M6.

### TREIZIEME MODE DE REALISATION (M13)

Le mode de réalisation M13 est décrit par différence avec le mode de réalisation M11.

Le mode de réalisation M13 est notamment illustré à la figure 32.

Le plot d'ajustement 188 a une aimantation de type vortex et le champ appliqué par l'élément d'ajustement 188 est selon la deuxième direction transversale Y. Cette différence apparaît sur la figure 32 avec la représentation de flèches correspondant à l'orientation de l'aimantation dans la troisième couche C3 de l'élément d'ajustement 188.

### CONCLUSION

En conclusion, il est à noter que chaque mode de réalisation M1 à M13 repose sur des diodes de spin.

Cela implique que les chaînes synaptiques 110 de chacun des modes de réalisation M1 à M13 comportent un ensemble de synapses 112, chaque synapse 112 comportant un résonateur 164, le résonateur 164 étant un résonateur spintronique. Les résonateurs 164 sont connectés électriquement en série de façon alternée par la ligne de transmission 162. La connexion alternée est spécifiquement décrite en référence à la figure 11.

La ligne de transmission 162 joue ainsi dans chacun des modes de réalisation M1 à M13 à l'exception du mode de réalisation M5 un double rôle : collecter les signaux rectifiés et transmettre les signaux radiofréquence provenant de la couche de neurone amont.

D'autres modes de réalisation avantageux ont été mis en évidence.

Par ailleurs, il a été mis en évidence qu'il est avantageux que chaque résonateur 164 présente des bornes 168 et 170 et une fréquence de résonance, chaque résonateur étant propre à générer entre les bornes 168 et 170 une tension continue dont l'amplitude dépend de l'écart de la fréquence de résonance du résonateur avec une fréquence de référence.

De préférence, chaque résonateur 164 est pourvu d'un élément d'ajustement 188 de la fréquence de résonance pour réaliser des réseaux de neurones 100 reconfigurables de manière binaire ou avec une infinité de variables. L'élément d'ajustement 188 est choisi dans le groupe constitué de :
- un plot magnétique propre à générer un champ magnétique sur le résonateur,
- un plot présentant une aimantation variable en fonction du courant appliqué sur le plot,
- une ligne de champ non magnétique alimentée par un courant propre à créer un champ magnétique sur le résonateur, et
- une couche en un matériau ayant une configuration différente en fonction du courant ou de la tension appliquée sur la couche.

Selon un certain mode de réalisation avantageux, au moins un résonateur 164 comporte un empilement de couches superposées selon une direction d'empilement, l'empilement comportant une première couche en matériau ferromagnétique, une couche en matériau non-magnétique et une deuxième couche en matériau ferromagnétique, la couche en matériau non-magnétique étant intercalée entre les deux couches en matériaux ferromagnétiques. De préférence, la couche en matériau non-magnétique est un isolant.

En variante, au moins un résonateur 164 comporte une unique couche réalisée en un matériau présentant des propriétés de magnéto-résistance anisotrope.

### EXEMPLE 2 : ARCHITECTURE AVEC EFFET HALL DE SPIN INVERSE

### PREMIER CAS DE L'EXEMPLE 2 : RESEAU FIGE

### QUATORZIEME MODE DE REALISATION (M14)

Le mode de réalisation M14 est décrit par différence avec le mode de réalisation M3.

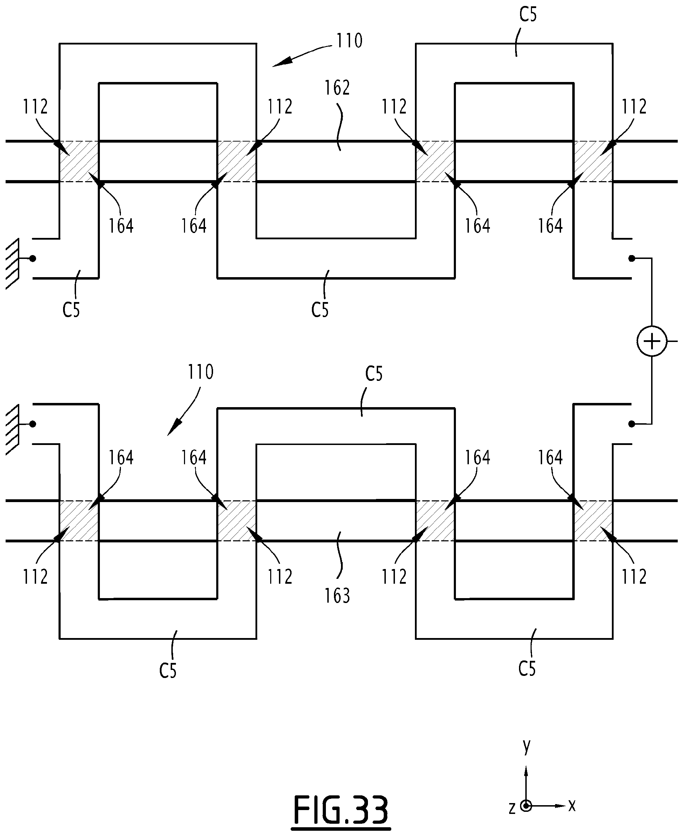

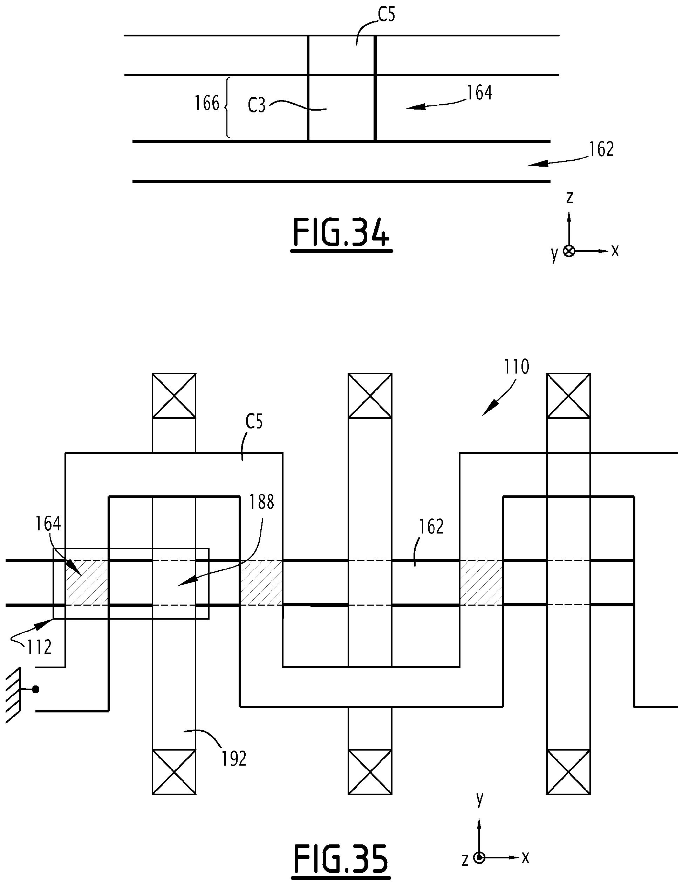

Le mode de réalisation M14 est notamment visible sur les figures 33 et 34.

Dans ce cas, une chaîne 110 comporte une deuxième ligne de transmission 163 comportant également des synapses 112.

Les deux lignes de transmission 162 et 163 et les synapses 112 sont agencées pour qu'une synapse 112 d'une première ligne de transmission 162 soit en regard d'une synapse 112 d'une deuxième ligne de transmission 163.

Selon l'exemple de la figure 33, chaque ligne de transmission comporte quatre synapses 112 de sorte que la première synapse 112 de la première ligne de transmission 162 est en regard de la première synapse 112 de la deuxième ligne de transmission 163, la deuxième synapse 112 de la première ligne de transmission 162 est en regard de la deuxième synapse 112 de la deuxième ligne de transmission 163, la troisième synapse 112 de la première ligne de transmission 162 est en regard de la troisième synapse 112 de la deuxième ligne de transmission 163 et la quatrième synapse 112 de la première ligne de transmission 162 est en regard de la quatrième synapse 112 de la deuxième ligne de transmission 163.

Dans le cas représenté, les deux lignes de transmission 162 et 163 sont parallèles et s'étendent principalement le long de la première direction transversale X. Il en résulte que la position de deux synapses 112 correspondantes des deux lignes de transmission est la même le long de la première direction transversale X.

Il peut être inséré une couche isolante entre la couche C3 et l'une des deux lignes de transmission 162 ou 163.

Chaque résonateur 164 est, en outre, pourvu d'un convertisseur. Le convertisseur est propre à convertir un courant de spin dans la couche C3 du résonateur 164 en un courant de charge par effet Hall de spin inverse.

L'effet Hall de spin inverse est la conversion d'un courant de spin se propageant selon une direction de propagation en courant de charge dans la direction orthogonale à la direction de propagation.

Le convertisseur comporte une couche de conversion C5.

La couche de conversion C5 est réalisée en un cinquième matériau MAT5.

Le cinquième matériau MAT5 est un métal possédant un fort effet Hall de spin inverse, c'est-à-dire permettant une conversion efficace du courant de spin en courant de charge.

A titre d'exemple, le cinquième matériau MAT5 est Pt, W, Pd, Au, Ag, Ir, Bi ou CuBi.

Selon l'exemple de la figure 34, la couche de conversion C5 est en contact avec la couche C3.

Selon l'exemple de la figure 33, les convertisseurs des résonateurs 164 d'une même ligne de transmission 162 sont reliés électriquement en série de manière à former une ligne de conversion.

Ainsi, la chaîne 110 comporte également deux lignes de conversion.

Dans l'exemple de la figure 33, les lignes de conversion sont agencées en forme de méandre.

Le méandre peut être de forme circulaire, triangulaire ou rectangulaire.

Seul le cas rectangulaire est décrit dans ce qui suit, la transposition à des formes circulaires ou triangulaires étant immédiate.

En l'espèce, les lignes de conversion sont formées par un ensemble de premières portions de ligne et de deuxièmes portions de ligne. Les premières portions s'étendent principalement le long de la première direction transversale X tandis que les deuxièmes portions s'étendent principalement le long de la deuxième direction transversale Y. Du fait de l'agencement en méandre, chaque ligne de conversion comporte une alternance de première portion de ligne et deuxième portion de ligne.

L'agencement des premières portions de lignes et des deuxièmes portions de ligne est tel que chaque deuxième portion de ligne recouvre totalement le résonateur 164.

En outre, les deux lignes de conversion sont telles que les premières portions de lignes sont alternativement proches puis loin. Plus précisément, les premières portions de ligne qui sont dans l'espace situé entre les deux lignes de conversion ont un positionnement correspondant. Similairement, les premières portions de ligne qui sont situées hors de l'espace situé entre les deux lignes de conversion ont un positionnement correspondant.

Toutefois, il est à noter qu'en variante, les positionnements sont décalés du fait que les lignes de conversion sont totalement indépendantes.

En bout des lignes de conversion, la chaîne 110 comporte un additionneur.

L'additionneur est propre à additionner les potentiels des deux lignes de conversion pour obtenir un potentiel de sortie.

En variante, au lieu d'un composant, l'additionneur est réalisé sous la forme d'une connexion électrique des deux lignes de conversion en série.

En fonctionnement, le courant radiofréquence (multiplexé et amplifié dans le cas décrit) venant des neurones 106 par la ligne de transmission 162 crée un champ magnétique radiofréquence sur l'empilement 166 de chaque résonateur 164 de la chaîne. Ainsi, lorsqu'un courant radiofréquence ${I}_{i}^{RF} cos \left({ω}_{i}. t\right)$ est appliqué dans la ligne de transmission 162 et agit sur un résonateur 164 implémentant une synapse 112_{l,m}, le champ radiofréquence généré va entraîner une précession de l'aimantation de la couche C3.

Alternativement, la précession de la couche C3 peut être due à des ondes de spin émises par des neurones 106 de la couche précédente et transmises par la ligne de transmission.

En outre, il est à noter que chaque résonateur 164 peut fonctionner selon l'une des configurations magnétiques de chacune des couches illustrées par les figures 13 à 18, donc notamment selon des configurations avec vortex. Cette observation s'applique à toutes les structures qui seront décrites dans la suite de la demande.

L'amplitude de la précession est d'autant plus grande que l'amplitude du courant radiofréquence ${I}_{i}^{RF}$ est élevée et que la fréquence *ωᵢ* est proche de la fréquence de résonance *ω*_{*l*,*m*} de la couche magnétique C3.

Dans le régime linéaire des faibles perturbations, l'amplitude de l'oscillation *θ* de la précession est proportionnelle au courant radiofréquence.

Par effet dit de pompage de spin ou de batterie de spin, la précession d'aimantation dans la couche C3 génère un courant de spin continu Iₛ dans le convertisseur C5 placé à proximité du résonateur 164.

Par l'effet dit de pompage de spin ou de batterie de spin, un matériau ferromagnétique dont l'aimantation est en précession injecte un courant de spin dans un conducteur adjacent par un contact ohmique, indépendamment de la conductance respective des deux matériaux.

L'amplitude du courant de spin continu Iₛ augmente quand au moins l'un de l'amplitude de l'oscillation *θ* de la précession et de la fréquence de résonance du résonateur 164 augmente.

Dans le convertisseur, le courant de spin continu Iₛ est converti en une tension continue par effet Hall de spin inverse. L'amplitude de la tension continue croît avec l'amplitude du courant de spin continu Iₛ et l'amplitude de l'effet Hall de spin. L'amplitude de la tension continue dépend aussi de paramètres magnétiques.

La tension rectifiée entre les deux bornes du résonateur 164 est la somme pondérée d'une contribution purement électrique $\frac{1}{2} \frac{{\partial }^{2} V}{\partial {I}^{2}} {\left({I}_{i}^{RF}\right)}^{2}$ et d'une contribution Lorentzienne due à l'effet Hall de spin inverse.

Il en résulte qu'il est possible d'obtenir aux bornes du résonateur 164 correspondant à la synapse 112_{*l*,*m*} une tension rectifiée proportionnelle *à* ${I}_{i}^{RF}$ et dépendant de (*ωᵢ*/*ω_{l,m}*).

Du fait que la fonction Lorentzienne ne change pas de signe, la première ligne de conversion produit donc une première partie des poids synaptiques.

La deuxième ligne de conversion produit une deuxième partie des poids synaptiques.

Du fait de l'agencement en miroir des premières portions des lignes de conversion, les deux parties correspondent à des contributions de signe opposé aux poids synaptiques.

La connexion en série alternée des convertisseurs des résonateurs 164 dans la chaîne 110ₗ permet de sommer les tensions rectifiées de chaque synapse 112_{*l*,*m*} de la chaîne 110*ₗ* tout en éliminant en grande partie les termes purement électriques tels que $\frac{1}{2} \frac{{\partial }^{2} V}{\partial {I}^{2}} {\left({I}_{i}^{RF}\right)}^{2}$*.*

Ainsi, la tension aux bornes de la ligne de conversion C5 parcourant l'ensemble de la chaîne 110*ₗ* est proportionnelle à la somme des signaux radiofréquences provenant des neurones de la couche précédente pondérée par le rapport entre les fréquences des neurones et des synapses de la chaîne. La tension résultante peut ensuite être envoyée au circuit de post-traitement 156, puis alimenter le neurone 106ₗ^{(k+1)}, ce qui correspond à réaliser l'inférence.

### DEUXIEME CAS DE L'EXEMPLE 2 : RESEAU RECONFIGURABLE BINAIRE

### QUINZIEME MODE DE REALISATION (M15)

Le mode de réalisation M15 est décrit par différence avec le mode de réalisation M14.

Le mode de réalisation M15 est notamment visible sur la figure 35.

Chaque synapse 112 comporte un élément d'ajustement 188 de la fréquence de résonance du résonateur 164. L'élément d'ajustement 188 est composé d'au moins une couche ferromagnétique.

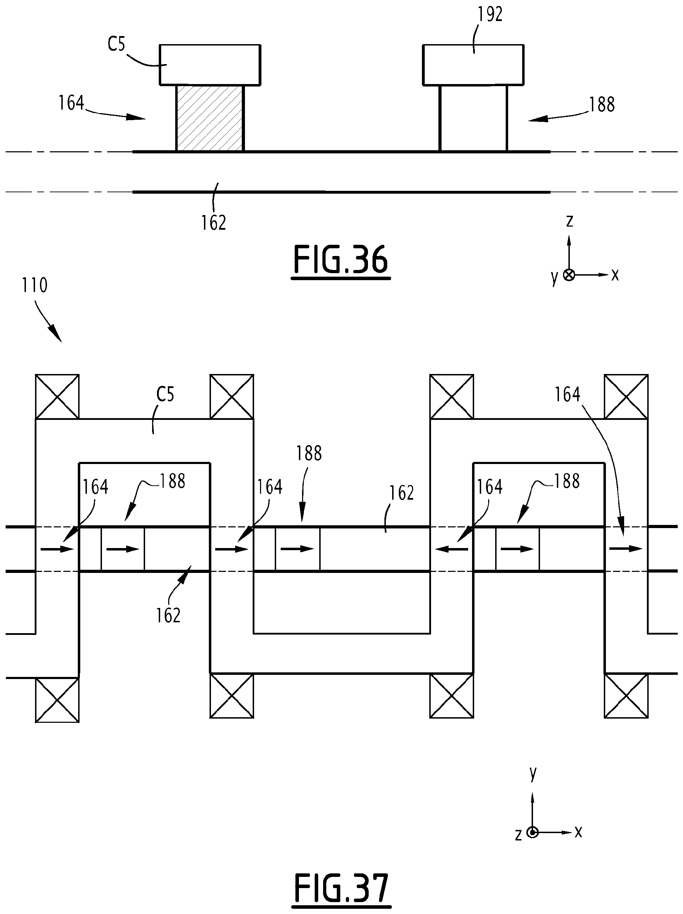

En outre, ainsi qu'illustré sur la figure 36, chaque élément d'ajustement 188 est en contact avec une ligne d'alimentation 192 respective fabriquée dans un métal lourd ayant un fort effet Hall de spin.

En fonctionnement, un courant de charge est injecté individuellement dans chaque ligne de métal lourd. Suivant le signe du courant de charge, l'aimantation de l'élément d'ajustement 188 est modifiée dans un sens ou dans l'autre grâce au couple dû à l'effet Hall de spin. Une fois l'aimantation commutée, le courant de charge est coupé, l'aimantation étant en position d'équilibre.

### SEIZIEME MODE DE REALISATION (M16)

Le mode de réalisation M16 est décrit par différence avec le mode de réalisation M15.

Le mode de réalisation M16 est notamment visible sur la figure 37.

Dans ce cas-là, l'élément d'ajustement 188 n'est pas pourvu de ligne d'alimentation en métal lourd.

Comme visible sur la figure 37, l'élément d'ajustement 188 est placé à côté du résonateur 164.

En fonctionnement, un courant de charge est envoyé sur la ligne de conversion, ce qui a pour effet de commuter l'aimantation du résonateur 164 dans la direction voulue suivant le signe du courant appliqué grâce au couple dû à l'effet Hall de spin. Une fois l'aimantation commutée, le courant de charge est coupé, l'aimantation étant en position d'équilibre.

### DIX-SEPTIEME MODE DE REALISATION (M17)

Le mode de réalisation M17 est décrit par différence avec le mode de réalisation M16.

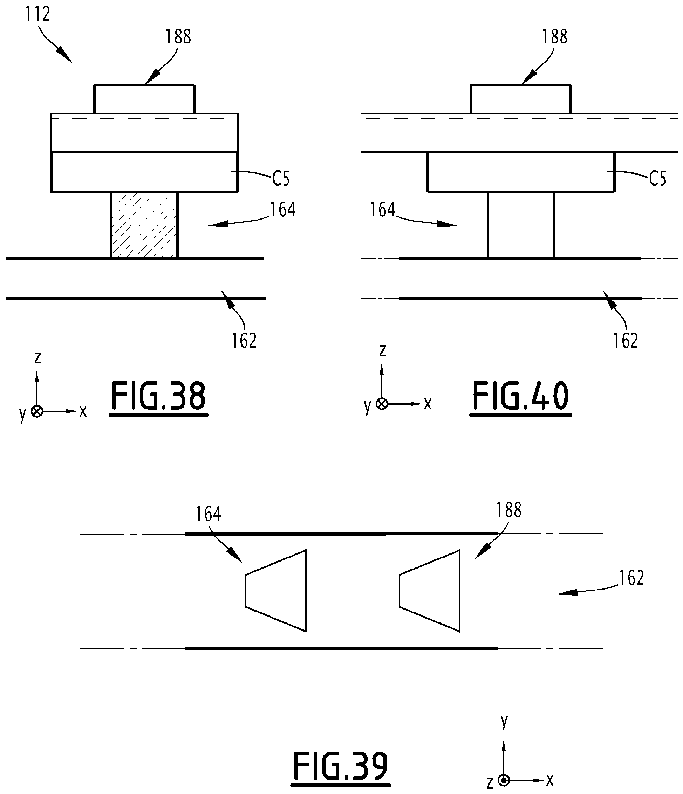

Le mode de réalisation M17 est notamment visible sur la figure 38.

En observant le fonctionnement du mode de réalisation M16, il est à noter que l'emplacement exact de l'élément d'ajustement 188 est indifférent pour le fonctionnement de l'ensemble de la structure.

Par exemple, dans le cas de la figure 38 correspondant au mode de réalisation M17, l'élément d'ajustement 188 est positionné au-dessus d'un résonateur 164.

Dans un tel cas, il est obtenu un empilement comprenant depuis bas en haut la ligne de transmission 162, le résonateur 164, la couche de conversion, la couche en matériau isolant et l'élément d'ajustement 188.

### DIX-HUITIEME MODE DE REALISATION (M18)

Le mode de réalisation M18 est décrit par différence avec le mode de réalisation M15.

Le mode de réalisation M18 est notamment visible sur la figure 39.

Selon le mode de réalisation M18, le réseau de neurones 100 présente les caractéristiques d'un réseau de neurones 100 selon l'un des modes de réalisation précités (modes de réalisation M15 à M17) et au moins l'un du résonateur 164 et de l'élément d'ajustement 188 présente une section transversale dans un plan de coupe normal à la direction d'empilement Z qui est asymétrique.

De préférence, comme dans le cas de la figure 39, la section asymétrique est la même pour le résonateur 164 et l'élément d'ajustement 188.

Selon l'exemple de la figure 39, la section est une section de forme trapézoïdale.

En fonctionnement, cela peut permettre d'obtenir quatre fréquences de résonance distinctes. Ces quatre fréquences de résonances proviennent des quatre configurations magnétiques distinctes de l'aimantation du résonateur 164 et de l'élément d'ajustement 188.

### TROISIEME CAS DE L'EXEMPLE 2 : RESEAU CAPABLE D'APPRENTISSAGE

### DIX-NEUVIEME MODE DE REALISATION (M19)

Le mode de réalisation M19 est décrit par différence avec le mode de réalisation M14.

Selon le mode de réalisation M19, chaque résonateur 164 comporte une quatrième couche C4 similaire au mode de réalisation M9.

Le fonctionnement est le même que pour le mode de réalisation M9.

### VINGTIEME MODE DE REALISATION (M20)

Le mode de réalisation M20 est décrit par différence avec le mode de réalisation M14.

Selon le mode de réalisation M20, l'élément d'ajustement 188 est un ensemble de lignes de contrôle présentant les mêmes propriétés en termes de structure et de fonctionnement que le mode de réalisation M10.

### VINGT ET UNIEME MODE DE REALISATION (M21)

Le mode de réalisation M21 est décrit par différence avec le mode de réalisation M20.

La figure 40 illustre la structure correspondante.

Selon le mode de réalisation M21, l'élément d'ajustement 188 est un ensemble de lignes de contrôle présentant les mêmes propriétés en termes de structure et de fonctionnement que le mode de réalisation M11.

### CONCLUSION

En conclusion, il est à noter que chaque mode de réalisation M14 à M21 repose sur les effets combinés du pompage de spin (appelé aussi batterie de spin) et de l'effet Hall de spin inverse.

En particulier, chaque mode de réalisation est tel que l'ensemble de synapses comporte un convertisseur réalisé en un métal présentant un fort effet Hall de spin inverse, une ligne de transmission transmettant les signaux hyperfréquence émis par les neurones de la couche précédente (courants hyperfréquences, champs électromagnétiques ou ondes de spin), et des synapses, chaque synapse étant un résonateur spintronique, les résonateurs spintroniques en contact avec le convertisseur, chaque résonateur étant un plot magnétique, chaque résonateur présentant une fréquence de résonance, chaque résonateur étant propre à générer un courant de spin dont l'amplitude dépend du rapport de la fréquence de résonance du résonateur avec une fréquence de référence, le convertisseur étant propre à convertir chaque courant de spin en courant de charge.

En outre, les résonateurs sont connectés par le convertisseur de façon alternée, la connexion alternée étant définie en référence à la figure 33.

De plus, le métal du convertisseur est un métal lourd présentant un fort effet Hall de spin inverse. Le métal du convertisseur est un alliage comprenant un ou plusieurs des éléments parmi le groupe constitué de Pt, W, Pd, Au, Ir, Ag et Bi.

Par ailleurs, selon certains modes de réalisation, chaque résonateur est pourvu d'une couche additionnelle réalisée en un matériau oxyde, ferroélectrique ou à changement de phase.

En variante, chaque résonateur est pourvu d'un élément d'ajustement de la fréquence de résonance, l'élément d'ajustement étant choisi dans le groupe constitué de :
- un plot magnétique propre à générer un champ magnétique sur le résonateur,
- un plot présentant une aimantation variable en fonction du courant appliqué sur le plot,
- une ligne de champ non magnétique alimentée par un courant propre à créer un champ magnétique sur le résonateur, et
- une couche en un matériau ayant une configuration différente en fonction du courant ou de la tension appliquée sur la couche.

De manière avantageuse, le plot magnétique est en contact avec la ligne de conversion, un matériau isolant étant intercalé entre le plot magnétique et la ligne de transmission et/ou chaque plot présente en section une forme trapézoïdale.

### EXEMPLE 3 : ARCHITECTURE AVEC RESONATEUR PASSIF

### PREMIER CAS DE L'EXEMPLE 3 : RESEAU FIGE

Dans le cas illustré, le réseau de neurones 100 est un réseau figé.

### VINGT-DEUXIEME MODE DE REALISATION (M22)

Le mode de réalisation M22 est décrit par différence avec le mode de réalisation M1.

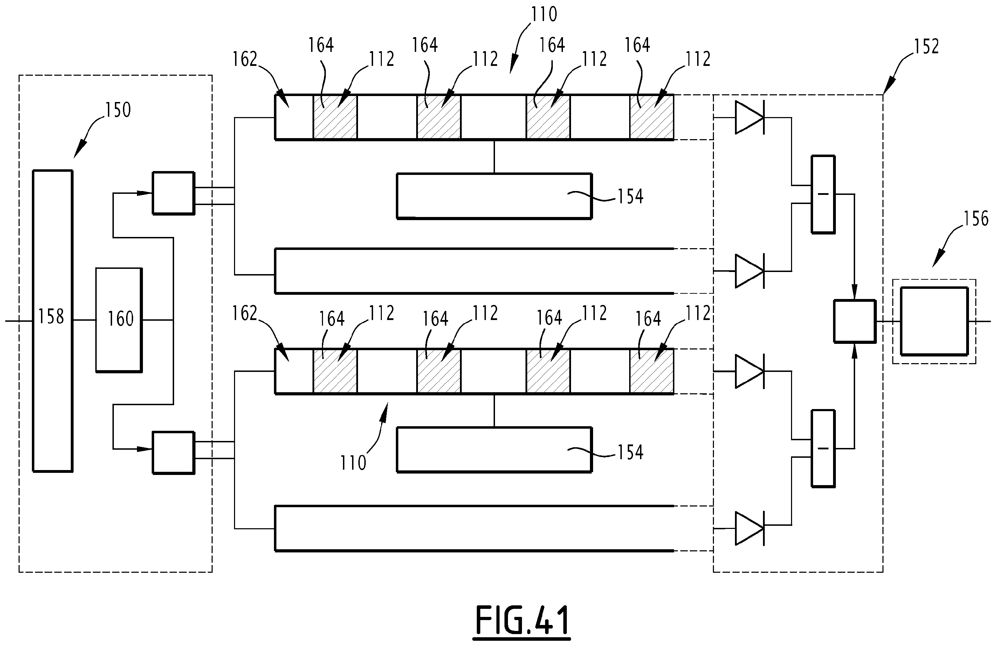

Le mode de réalisation M22 est représenté sur les figures 41 à 43.

En référence à la figure 41, chaque chaîne 110 comporte deux sous-chaînes, la première sous-chaîne ayant pour fonction d'implémenter la partie positive des poids synaptiques et la deuxième sous-chaîne ayant pour fonction d'implémenter la partie négative des poids synaptiques.

La première sous-chaîne comporte un séparateur, des synapses 112, une ligne de transmission 162 et une ligne de référence.

Par exemple, le séparateur est un diviseur de signaux radiofréquence.

La ligne de transmission 162 s'étend le long de la première direction transversale X.

La ligne de transmission 162 présente une entrée et une sortie.

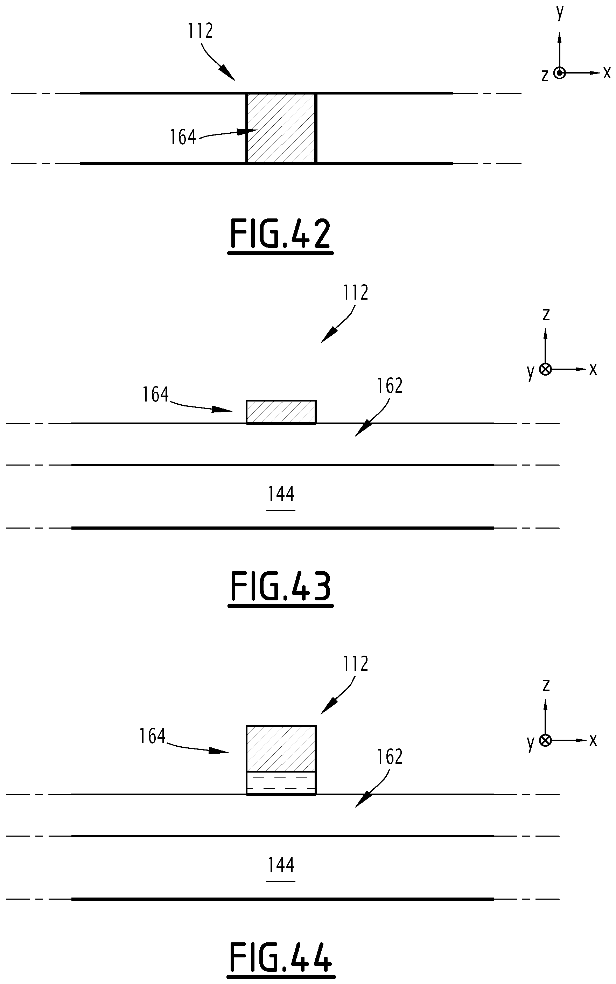

La ligne de transmission 162 est en contact avec le substrat comme visible sur la figure 43.

Dans l'exemple décrit, la ligne de transmission 162 et la ligne de référence sont parallèles l'une par rapport à l'autre.

Chaque synapse 112 est un résonateur 164 présentant une unique couche C3 présentant les mêmes propriétés que la troisième couche C3 dans la première structure du premier cas de l'exemple 1. Comme le résonateur 164 ne comporte pas de bornes, le résonateur 164 est passif.

Les résonateurs 164 sont placés en série au-dessus de la ligne de transmission 162 comme illustré sur les figures 41 et 42, de sorte que sur la figure 43, il est observé un empilement du résonateur 164, de la ligne de transmission 162 et du substrat.

En variante, les résonateurs 164 sont placés en-dessous de la ligne de transmission 162.

La ligne de référence présente la même géométrie que la ligne de transmission 162.

La ligne de référence présente également une entrée et une sortie.

Comme visible sur la figure 41, le circuit de rectification 152 comprend des diodes.

Une diode est connectée à la sortie de chaque ligne de transmission 162 et à la sortie de chaque ligne de référence.

La diode est, par exemple, une diode de type CMOS.

La diode permet de transformer le signal radiofréquence incident en signal continu.

Tout autre dispositif permettant d'effectuer la même fonction est envisageable.

A titre d'exemple, au lieu d'une diode, un détecteur de puissance radiofréquence est utilisé.

Le circuit de rectification 152 comprend, en outre, un premier soustracteur.

Le premier soustracteur est propre à faire la soustraction entre les tensions continues en sortie des diodes.

De préférence, le premier soustracteur est aussi réalisé selon une technologie CMOS.

Le circuit de rectification 152 comporte aussi un deuxième soustracteur propre à réaliser la soustraction entre la sortie du premier soustracteur de la première sous-chaîne et la sortie du premier soustracteur de la deuxième sous-chaîne.

Le circuit de post-traitement 156 comporte un amplificateur.

En fonctionnement, les signaux de sortie des neurones 106 sont transmis au circuit de prétraitement 150.

Les signaux de sortie des neurones 106 sont multiplexés et amplifiés par le circuit de prétraitement 150.

Au niveau d'une sous-chaîne comme représenté à la figure 41, les courants hyperfréquence multiplexés I^{(k)} provenant des neurones 106 sont séparés en un premier signal et un deuxième signal par le séparateur, les deux signaux étant identiques.

Le premier signal est envoyé sur la ligne de transmission 162 de la première sous-chaîne.

Au passage du premier signal, l'aimantation des résonateurs 164 est mise en précession, absorbant ainsi une partie du premier signal.

L'absorption est d'autant plus élevée que les fréquences de résonance des résonateurs 164 et les fréquences d'oscillations des oscillateurs sont proches.

Le signal de sortie de la ligne de transmission 162 est noté ${I}_{j}^{OUT - RES}$*.*

Similairement, le deuxième signal est envoyé sur la ligne de référence de la première sous-chaîne. En l'absence d'absorption par un résonateur 164, le signal de sortie est un signal de référence noté ${I}_{j}^{OUT - REF}$*.*

Chaque signal de sortie ${I}_{j}^{OUT - RES}$ et ${I}_{j}^{OUT - REF}$ est rectifié par le circuit de rectification 152.

Les signaux obtenus en sortie du circuit de rectification 152 sont ensuite soustraits par le premier soustracteur.

Cela permet d'obtenir en sortie de la première sous-chaîne une première tension positive notée ${V}_{DC , j}^{+}$.

Le même fonctionnement s'applique à la deuxième sous-chaîne, ce qui permet d'obtenir une deuxième tension négative notée ${V}_{DC , j}^{-}$*.*

A l'aide du deuxième soustracteur, il est obtenu une tension totale ${V}_{DC , j}^{TOT}$ vérifiant : ${V}_{DC , j}^{TOT} = {V}_{DC , j}^{+} - {V}_{DC , j}^{-}$

La tension totale ${V}_{DC , j}^{TOT}$ de la chaîne 110 est ensuite amplifiée par l'amplificateur du circuit de post-traitement 156 et envoyée au neurone 106 de la couche aval.

### VINGT-TROISIEME MODE DE REALISATION (M23)

Le mode de réalisation M23 est décrit par différence avec le mode de réalisation M22.

Selon le mode de réalisation M23 illustré sur la figure 44, les résonateurs 164 sont agencés à distance de la ligne de transmission 162. Dans ce cas, une couche en un matériau isolant est intercalée entre la ligne de transmission 162 et chaque résonateur 164.

En variante, les résonateurs 164 sont agencés sous la ligne de transmission 162 et en contact avec la ligne de transmission 162. Dans ce cas, une couche en un matériau isolant est intercalée entre la ligne de transmission 162 et les résonateurs 164.

Le fonctionnement du mode de réalisation M23 est identique au cas du mode de réalisation M22 qui vient d'être décrit.

L'emploi d'un tel mode de réalisation M23, et plus particulièrement l'emploi de l'isolant, atténue l'effet d'absorption tout en évitant de modifier la conductivité de la ligne de transmission 162.

### VINGT-QUATRIEME MODE DE REALISATION (M24)

Le mode de réalisation M24 est décrit par différence avec le mode de réalisation M22.

Selon le mode de réalisation M24, des plots en un métal non magnétique sont agencés sur la ligne de référence.

Les plots en métal non magnétiques présentent les mêmes dimensions que les résonateurs 164.

En outre, les plots en métal non magnétique présentent une conductivité égale à la conductivité des résonateurs 164 à 2% près.

Cela permet d'obtenir une meilleure précision sur le signal de référence.

### DEUXIEME CAS DE L'EXEMPLE 3 : RESEAU RECONFIGURABLE BINAIRE

Dans l'exemple illustré, le réseau de neurones 100 est un réseau reconfigurable binaire.

### VINGT-CINQUIEME MODE DE REALISATION (M25)

Le mode de réalisation M25 est décrit par différence rapport au mode de réalisation M22.

Il est supposé que les résonateurs 164 présentent une aimantation uniforme, la transposition au cas d'une aimantation vortex étant immédiate.

Chaque synapse 112 comporte un élément d'ajustement 188 de la fréquence de du résonateur 164 correspondant présentant les mêmes propriétés que celui du mode de réalisation M15.

En outre, chaque élément de contact est en contact avec une ligne d'alimentation en métal lourd respective présentant un fort effet Hall de spin.

En fonctionnement, un courant de charge est injecté individuellement dans chaque ligne de métal lourd. Suivant le signe du courant de charge, l'aimantation de l'élément d'ajustement 188 est modifiée dans un sens ou dans l'autre grâce au couple dû à l'effet Hall de spin. Une fois l'aimantation commutée, le courant de charge est coupé, l'aimantation étant en position d'équilibre.

### VINGT-SIXIEME MODE DE REALISATION (M26)

Le mode de réalisation M26 est décrit par différence avec le mode de réalisation M25.

Dans ce cas, l'élément d'ajustement 188 est celui du mode de réalisation M16.

Le fonctionnement de l'élément d'ajustement 188 est, en outre, le fonctionnement de l'élément d'ajustement 188 du mode de réalisation M7.

### VINGT-SEPTIEME MODE DE REALISATION (M27)

Le mode de réalisation M27 est décrit par différence rapport au mode de réalisation M25.

Selon le mode de réalisation M27, l'élément d'ajustement 188 est positionné différemment.

Dans ce cas de figure, l'élément d'ajustement 188 est positionné en dessus de la couche C3 de sorte qu'un empilement 166 élément d'ajustement 188, couche barrière, couche C3 et couche séparatrice est obtenu. L'élément d'ajustement 188 est en contact avec une ligne métallique tandis que la couche séparatrice est en contact avec la ligne de transmission 162. Ainsi, l'empilement résultant est une jonction tunnel magnétique ou une vanne de spin.

En outre, le réseau de neurones 100 est pourvu d'un injecteur de courant agencé pour générer un courant traversant l'empilement 166 depuis la ligne métallique jusqu'à la ligne de transmission 162, c'est-à-dire un courant selon une direction parallèle à la direction d'empilement Z.

En fonctionnement, cela signifie qu'une commutation de la première couche C3 est obtenue par transfert de spin.

### TROISIEME CAS DE L'EXEMPLE 3 : RESEAU CAPABLE D'APPRENTISSAGE

Dans l'exemple illustré, le réseau de neurones 100 est un réseau capable d'apprentissage.

### VINGT-HUITIEME MODE DE REALISATION (M28)

Le mode de réalisation M28 est décrit par différence par rapport au mode de réalisation M25.

Dans ce cas, l'élément d'ajustement 188 est celui du mode de réalisation M19.

Le fonctionnement de l'élément d'ajustement 188 est, en outre, le fonctionnement de l'élément d'ajustement 188 du mode de réalisation M19.

### VINGT-NEUVIEME MODE DE REALISATION (M29)

Le mode de réalisation M29 est décrit par différence rapport au mode de réalisation M25.

Dans ce cas, l'élément d'ajustement 188 est un ensemble de lignes de contrôle présentant les mêmes propriétés en termes de structure et de fonctionnement que le mode de réalisation M20.

### TRENTE MODE DE REALISATION (M30)

Le mode de réalisation M30 est décrit par différence rapport au mode de réalisation M25.

Selon le mode de réalisation M30, l'élément d'ajustement 188 est un ensemble de lignes de contrôle présentant les mêmes propriétés en termes de structure et de fonctionnement que le mode de réalisation M11.

### TRENTE ET UNIEME MODE DE REALISATION (M31)

Le mode de réalisation M31 est décrit par différence rapport au mode de réalisation M25.

Selon le mode de réalisation M31, l'élément d'ajustement 188 est un empilement 166 de couches présentant les mêmes propriétés en terme de structure et de fonctionnement que le mode de réalisation M12.

### CONCLUSION

L'ensemble des modes de réalisations M22 à M31 correspond à l'adaptation des structures précédemment décrites (avec diode de spin et effet Hall de spin inverse) pour le cas d'un résonateur 164 passif. Un tel résonateur 164 est, en effet, aisé à fabriquer.

### CONCLUSION GENERALE

Parmi l'ensemble des modes de réalisation présentés pour réaliser un réseau de neurones 100 qui soit profond, il ressort des points communs qui sont mis en évidence dans ce qui suit.

Chaque réseau de neurones 100 selon l'ensemble des modes de réalisation (M1 à M31) est tel que le réseau de neurones 100 comportant des chaînes synaptiques 110, chaque chaîne synaptique 110 comportant des synapses 112, chaque synapse 112 étant un résonateur spintronique 164, les résonateurs spintroniques 164 étant en série, chaque résonateur spintronique 164 ayant une fréquence de résonance ajustable. Le réseau de neurones 100 comporte des couches de neurones 102 ordonnées, chaque neurone 106 étant un oscillateur radiofréquence oscillant à une fréquence propre, une couche inférieure étant reliée à une couche supérieure par une interconnexion 104 comportant un ensemble 108 de chaînes synaptiques 110 reliées à des circuits de rectification, chaque fréquence de résonance de l'ensemble 108 de chaînes synaptiques 110 correspondant à une fréquence propre d'un oscillateur radiofréquence de la couche inférieure.

Selon des modes de réalisation préférés, le réseau de neurones 100 comporte des éléments d'ajustement de la fréquence de résonance par modification de l'un parmi la tension, le courant ou le champ magnétique appliquée à un résonateur spintronique 164.

En outre, s'il est défini un plan dans lequel s'étendent principalement les couches de neurones 102, les chaînes synaptiques 110 peuvent être agencées dans ce plan ou perpendiculairement à ce plan.

Par ailleurs, les neurones 106 de la couche 102 inférieure sont propres à transmettre un signal aux chaînes synaptiques 110, le signal étant un courant radiofréquence, un champ magnétique radiofréquence ou une onde de spin.

Les modes de réalisation partagent également le fait que chaque chaîne synaptique 110 comporte une ligne de transmission comportant les résonateurs 164, dont la sortie est rectifiée via des circuits de rectification 152.

De plus, le réseau de neurones 100 comporte une pluralité de mémoires spintroniques 154, chaque mémoire spintronique 154 étant associée à une seule chaîne synaptique 110.

De préférence, le nombre de couches 102 est supérieur à 3, de préférence supérieur à 5 et/ou le nombre de chaînes synaptiques 110 d'un ensemble est supérieur à 9, de préférence supérieur à 100.

Par ailleurs, un certain nombre de modes de réalisation sont tels que l'interconnexion 104 comporte un circuit de prétraitement 150 et un circuit de post-traitement 156, le circuit de prétraitement 150 comportant l'un parmi un multiplexeur 158 et un amplificateur 160 et le circuit de post-traitement 156 comportant l'un parmi un amplificateur et des mémoires.

D'autres modes de réalisation sont envisageables en combinant les modes de réalisation M1 à M31 précités avec les différents types d'oscillateurs cités lorsque cela est techniquement possible.

## Revendications

1. Dispositif implémentant une chaîne synaptique (110) de réseau de neurones (100), dite chaîne synaptique (110), comportant un ensemble de synapses (112), chaque synapse (112) étant un résonateur spintronique (164), chaque résonateur spintronique (164) présentant une première borne (168) et une deuxième borne (170), chaque résonateur (164) présentant une fréquence de résonance, chaque résonateur (164) étant propre à recevoir des signaux alternatifs, chaque résonateur (164) étant propre à générer entre ses bornes (168, 170) une tension continue dont l'amplitude dépend de l'écart de la fréquence de résonance du résonateur (164) avec une fréquence de référence,
dans lequel les résonateurs spintroniques (164) sont connectés électriquement en série par une ligne de transmission (162) et sont connectés de façon alternée,
la ligne de transmission (162) présentant une pluralité de portions de ligne de transmission et, pour chaque résonateur spintronique (164) de la chaîne synaptique (110) connecté entre un premier résonateur spintronique de la chaîne synaptique (110), dit « résonateur amont », et un deuxième résonateur spintronique de la chaîne synaptique (110), dit « résonateur aval », le résonateur spintronique (164) considéré étant connecté, d'une part, au résonateur spintronique aval par une première portion de ligne de transmission connectant électriquement la première borne du résonateur spintronique (164) considéré et la première borne du résonateur spintronique aval et, d'autre part, au résonateur spintronique amont par une deuxième portion de ligne de transmission connectant électriquement la deuxième borne du résonateur spintronique (164) considéré et la deuxième borne du résonateur spintronique amont.

2. Dispositif selon la revendication 1, dans lequel chaque résonateur (164) est pourvu d'un élément d'ajustement (188) de la fréquence de résonance, l'élément d'ajustement (188) étant choisi dans le groupe constitué de :
- un plot magnétique propre à générer un champ magnétique sur le résonateur (164),
- un plot présentant une aimantation variable en fonction d'un courant appliqué sur le plot,
- une ligne de champ non magnétique alimentée par un courant propre à créer un champ magnétique sur le résonateur (164), et
- une couche en un matériau ayant une configuration différente en fonction d'un courant ou de la tension appliquée sur la couche.

3. Dispositif selon la revendication 1 ou 2 dans lequel un empilement de couches (166) comporte une première couche (C1) en matériau ferromagnétique, une couche en matériau non-magnétique (C2) et une deuxième couche en matériau ferromagnétique (C3), la couche en matériau non-magnétique (C2) étant intercalée entre les deux couches en matériaux ferromagnétiques (C1, C3).

4. Dispositif selon la revendication 3, dans laquelle le matériau de chaque couche en matériau non-magnétique (C2) est un isolant.

5. Dispositif selon la revendication 3, dans laquelle le matériau de chaque couche en matériau non-magnétique (C2) est un métal.

6. Dispositif selon l'une quelconque des revendications 1 à 5, dans laquelle au moins un résonateur (164) comporte une unique couche réalisée en un matériau magnétique présentant des propriétés de magnéto-résistance anisotrope.

7. Dispositif selon l'une quelconque des revendications 1 à 6, dans lequel l'ensemble de synapses (112) comporte, en outre, une antenne (182), l'antenne (182) collectant un signal d'entrée ( ${I}_{i}^{RF}$), notamment un signal d'entrée hyperfréquence pour le transmettre aux résonateurs spintroniques (164).

8. Dispositif pour l'implémentation d'un réseau de neurones comportant au moins un dispositif selon l'une quelconque des revendications 1 à 7.

## Patentansprüche

1. Vorrichtung, die eine synaptische Kette (110) eines neuronalen Netzes (100), als synaptische Kette (110) bezeichnet, implementiert, umfassend eine Gruppe von Synapsen (112), wobei jede Synapse (112) ein spintronischer Resonator (164) ist, wobei jeder spintronische Resonator (164) einen ersten Anschluss (168) und einen zweiten Anschluss (170) aufweist, wobei jeder Resonator (164) eine Resonanzfrequenz aufweist, wobei jeder Resonator (164) dazu eingerichtet ist, Wechselsignale zu empfangen, wobei jeder Resonator (164) dazu eingerichtet ist, zwischen seinen Anschlüssen (168, 170) eine Gleichspannung zu erzeugen, deren Amplitude von der Abweichung der Resonanzfrequenz des Resonators (164) von einer Referenzfrequenz abhängt
wobei die spintronischen Resonatoren (164) durch eine Übertragungsleitung (162) elektrisch in Reihe geschaltet und abwechselnd verbunden sind,
die Übertragungsleitung (162) eine Vielzahl von Übertragungsleitungsabschnitten aufweist und, für jeden spintronischen Resonator (164) der synaptischen Kette (110), der zwischen einem ersten spintronischen Resonator der synaptischen Kette (110), als "vorgeschalteter Resonator" bezeichnet, und einem zweiten spintronischen Resonator der synaptischen Kette (110), als "nachgeschalteter Resonator" bezeichnet, verbunden ist, der betrachtete spintronische Resonator (164) einerseits mit dem nachgeschalteten spintronischen Resonator durch einen ersten Übertragungsleitungsabschnitt verbunden ist, der den ersten Anschluss des betrachteten spintronischen Resonators (164) und den ersten Anschluss des nachgeschalteten spintronischen Resonators elektrisch verbindet, und andererseits mit dem vorgeschalteten spintronischen Resonator durch einen zweiten Übertragungsleitungsabschnitt verbunden ist, der den zweiten Anschluss des betrachteten spintronischen Resonators (164) und den zweiten Anschluss des vorgeschalteten spintronischen Resonators elektrisch verbindet.

2. Vorrichtung nach Anspruch 1, wobei jeder Resonator (164) mit einem Einstellelement (188) für die Resonanzfrequenz versehen ist, wobei das Einstellelement (188) aus der Gruppe ausgewählt ist, bestehend aus:
- einem magnetischen Plättchen, das dazu eingerichtet ist, ein Magnetfeld auf dem Resonator (164) zu erzeugen,
- einem Plättchen, das eine in Abhängigkeit von einem an das Plättchen angelegten Strom veränderliche Magnetisierung aufweist,
- einer nichtmagnetischen Feldleitung, die mit einem Strom gespeist wird, der dazu eingerichtet ist, ein Magnetfeld auf dem Resonator (164) zu erzeugen, und
- einer Schicht aus einem Material, das in Abhängigkeit von einem Strom oder der an die Schicht angelegten Spannung eine unterschiedliche Konfiguration aufweist.

3. Vorrichtung nach Anspruch 1 oder 2, wobei ein Schichtstapel (166) eine erste Schicht (C1) aus ferromagnetischem Material, eine Schicht aus nichtmagnetischem Material (C2) und eine zweite Schicht aus ferromagnetischem Material (C3) umfasst, wobei die Schicht aus nichtmagnetischem Material (C2) zwischen den beiden Schichten aus ferromagnetischen Materialien (C1, C3) angeordnet ist.

4. Vorrichtung nach Anspruch 3, bei der das Material jeder Schicht aus nichtmagnetischem Material (C2) ein Isolator ist.

5. Vorrichtung nach Anspruch 3, bei der das Material jeder Schicht aus nichtmagnetischem Material (C2) ein Metall ist.

6. Vorrichtung nach einem der Ansprüche 1 bis 5, bei der mindestens ein Resonator (164) eine einzige Schicht umfasst, die aus einem magnetischen Material hergestellt ist, das Eigenschaften der anisotropen Magnetoresistenz aufweist.

7. Vorrichtung nach einem der Ansprüche 1 bis 6, wobei die Gruppe von Synapsen (112) ferner eine Antenne (182) umfasst, wobei die Antenne (182) ein Eingangssignal ( ${I}_{i}^{RF}$), insbesondere ein Mikrowellen-Eingangssignal, auffängt, um es an die spintronischen Resonatoren (164) zu übertragen.

8. Vorrichtung zur Implementierung eines neuronalen Netzes, umfassend mindestens eine Vorrichtung nach einem der Ansprüche 1 bis 7.

## Claims

1. Device implementing a synaptic chain (110) of a neural network (100), referred to as synaptic chain (110), comprising a set of synapses (112), each synapse (112) being a spintronic resonator (164), each spintronic resonator (164) having a first terminal (168) and a second terminal (170), each resonator (164) having a resonance frequency, each resonator (164) being configured to receive alternating signals each resonator (164) being configured to generate between its terminals (168, 170) a DC voltage whose amplitude depends on the difference between the resonance frequency of the resonator (164) and a reference frequency,
wherein the spintronic resonators (164) are electrically connected in series by a transmission line (162) and are connected in an alternating manner,
the transmission line (162) having a plurality of transmission line portions and, for each spintronic resonator (164) of the synaptic chain (110) 15 connected between a first spintronic resonator of the synaptic chain (110), referred to as "upstream resonator", and a second spintronic resonator of the synaptic chain (110), referred to as "downstream resonator", the spintronic resonator (164) under consideration being connected, on the one hand, to the downstream spintronic resonator by a first transmission line portion electrically connecting the first terminal of the spintronic resonator (164) under consideration and the first terminal of the downstream spintronic resonator and, on the other hand, to the upstream spintronic resonator by a second transmission line portion electrically connecting the second terminal of the spintronic resonator (164) under consideration and the second terminal of the upstream spintronic resonator.

2. Device according to claim 1, wherein each resonator (164) is provided with an adjustment element (188) for the resonance frequency, the adjustment element (188) being selected from the group consisting of:
- a magnetic pad configured to generate a magnetic field on the resonator (164),
- a pad having a magnetization that varies as a function of a current applied to the pad,
- a non-magnetic field line supplied with a current configured to create a magnetic field on the resonator (164), and
- a layer made of a material having a different configuration as a function of a current or voltage applied to the layer.

3. Device according to claim 1 or 2 wherein a stack of layers (166) comprises a first layer (C1) made of ferromagnetic material, a layer made of non-magnetic material (C2) and a second layer made of ferromagnetic material (C3), the layer made of non-magnetic material (C2) being interposed between the two layers made of ferromagnetic materials (C1, C3).

4. Device according to claim 3, wherein the material of each layer made of non-magnetic material (C2) is an insulator.

5. Device according to claim 3, wherein the material of each layer made of non-magnetic material (C2) is a metal.

6. Device according to any one of the claims 1 to 5, wherein at least one resonator (164) comprises a single layer made of a magnetic material having anisotropic magnetoresistance properties.

7. Device according to any one of the claims 1 to 6, wherein the set of synapses (112) further comprises an antenna (182), the antenna (182) collecting an input signal ( ${I}_{i}^{RF}$), in particular a microwave input signal for 20 transmitting it to the spintronic resonators (164).

8. Device for the implementation of a neural network comprising at least one device according to any one of the claims 1 to 7.
